(19) Europäisches Patentamt
European Patent Office
Office européen des brevets

(11) **EP 1 025 417 B1**

(12) **EUROPÄISCHE PATENTSCHRIFT**

(45) Veröffentlichungstag und Bekanntmachung des Hinweises auf die Patenterteilung:
**11.12.2002 Patentblatt 2002/50**

(21) Anmeldenummer: **98948659.2**

(22) Anmeldetag: **23.10.1998**

(51) Int Cl.⁷: $G01B\ 9/02$, $G01N\ 21/45$

(86) Internationale Anmeldenummer:
**PCT/CH98/00456**

(87) Internationale Veröffentlichungsnummer:
**WO 99/022198 (06.05.1999 Gazette 1999/18)**

(54) **VERFAHREN UND VORRICHTUNG ZUR MESSUNG VON OPTISCHEN EIGENSCHAFTEN TRANSPARENTER UND/ODER DIFFUSIVER GEGENSTÄNDE**

METHOD AND DEVICE FOR MEASURING THE OPTICAL PROPERTIES OF TRANSPARENT AND/OR DIFFUSIVE OBJECTS

PROCEDE ET DISPOSITIF DE MESURE DES CARACTERISTIQUES OPTIQUES D'OBJETS TRANSPARENTS ET/OU DIFFUSANTS

(84) Benannte Vertragsstaaten:
**CH DE GB LI**

(30) Priorität: **23.10.1997 CH 247097**

(43) Veröffentlichungstag der Anmeldung:
**09.08.2000 Patentblatt 2000/32**

(73) Patentinhaber: **ECOLE POLYTECHNIQUE FEDERALE DE LAUSANNE**
**1015 Lausanne (CH)**

(72) Erfinder:
• **LINDGREN, Goesta, Fredrik**
**S-118 66 Stockholm (SE)**

• **SALATHE, René, Paul**
**CH-1024 Ecublens (CH)**
• **WAELTI, Rudolf**
**CH-3097 Liebefeld (CH)**

(74) Vertreter: **Roshardt, Werner Alfred, Dipl.-Phys.**
**Keller & Partner**
**Patentanwälte AG**
**Schmiedenplatz 5**
**Postfach**
**3000 Bern 7 (CH)**

(56) Entgegenhaltungen:
**EP-A- 0 137 946**     **EP-A- 0 733 877**
**WO-A-96/35100**     **US-A- 4 869 593**

## Beschreibung

### Technisches Gebiet

Die Erfindung betrifft ein Verfahren und eine Vorrichtung zur Messung optischer Eigenschaften transparenter und/oder diffusiver Gegenstände, insbesondere deren Reflexions- und/oder Transmissionsfaktors als Abstandfunktion (Reflexions- bzw. Transmissionsprofil). Unter den messbaren optischen Eigenschaften werden die aus diesen Profilen ableitbaren Grössen verstanden; wie z.B. der (optische) Abstand von Oberflächen, Grenzflächen oder Störstellen voneinander, der Brechungsindex des Gegenstandsmaterials, die polarisierenden Eigenschaften des Materials sowie dessen Absorptions- und Diffusionskoeffizient.

Die Transparenz von Gegenständen hängt von deren wellenlängenabhängigen Schwächungskoeffizienten $\alpha$ [cm$^{-1}$] und deren Dicke bzw. der vorgegebenen Messstrecke d ab. Als transparent werden Gegenstände bezeichnet, deren Transmissionsfaktor T = exp (-$\alpha \cdot$d) noch innerhalb des Messbereichs der unten beschriebenen Interferometer liegt, wobei die Transmission bei den unten beschriebenen Interferometern T$^2$ infolge des "Hin- und Rückweges" der Strahlung ist. In diffusiven Gegenständen wird Strahlung stark gestreut, nicht notwendigerweise absorbiert. Beispielsweise sind als diffusive Gegenstände Milchglasscheiben, Delrin, organische Gewebe (Haut, menschliche und tierische Organe, Pflanzenteile etc.) anzusehen.

Aus der EP-A 0 733 877 ist eine Meßvorrichtung bekannt, welche zwei gekoppelte Michelson-Interferometer hat. Das erste Interferometer arbeitete mit einer nicht kohärenten, ersten Strahlung, d.h. einer Strahlung, welche eine sehr kleine Kohärenzlänge aufweist; das zweite Interferometer mit einer Strahlung großer Kohärenzlänge. Die erste Strahlung durchlief das erste Interferometer im wesentlichen in Strahlungsleitern geführt. Im Meßzweig war ein auszumessendes Objekt angeordnet. Im Referenzzweig war ein Weglängenvariationselement mit einem Spiegel angeordnet. Der Spiegel war derart ausgebildet, daß die aus dem Strahlungsleiter austretende Strahlung wieder in diesen rückreflektiert wurde. Die zweite Strahlung durchlief das zweite Interferometer als "Freiraumstrahlung". Ein Interferometerzweig des zweiten Interferometers wurde mit einem feststehenden Retroreflektor abgeschossen. Ein weiterer Zweig enthielt ebenfalls das Weglängenvariationselement, welches ebenfalls als Retroreflektor ausgebildet war. An diesem Retroreflektor war der Spiegel des ersten Interferometers angeordnet. Die erste und die zweite Strahlung werden in geometrisch "sauber" voneinander getrennten Strahiengängen auf diesen Weglängenvariator geführt und getrennt voneinander reflektiert.

### Darstellung der Erfindung

### Aufgabe der Erfindung

Aufgabe der Erfindung ist es, eine Vorrichtung, insbesondere als Reflektometer für bevorzugte Anwendungen im Bereich der Oberflächendiagnostik, der optischen Tomographie und der Photometrik zu schaffen, mit welcher optische Eigenschaften mit einer hohen Genauigkeit, hoher Dynamik sowie einem kleinstmöglichen, lediglich durch Schrotrauschen begrenzten Rauschpegel bestimmbar sind.

### Lösung der Aufgabe

Die Aufgabe wird dadurch gelöst, dass mit zwei gekoppelten Interferometern gearbeitet wird. Eines der beiden Interferometer hat eine Strahlungsquelle mit einer kleinen und das andere eine Strahlungsquelle mit einer grossen Kohärenzlänge. Die verschiedenen Arme jedes Interferometers sind derart ausgebildet, dass ihre optische Weglängendifferenz innerhalb der Kohärenzlänge der betreffenden Strahlung liegt. Eine kleine Kohärenzlänge wird von einer Strahlungsquelle mit einer grossen spektralen Breite ihrer Strahlung erhalten und eine grosse Kohärenzlänge von einer Strahlungsquelle mit einer schmalbandigen Strahlung. Der auszumessende Gegenstand ist im Messzweig des "breitbandigen" Interferometers angeordnet und ein feststehender Spiegel in einem Zweig des "schmalbandigen" Interferometers. Ein gemeinsamer Zweig als Referenzzweig beider Interferometer beinhaltet eine Weglängenvariationseinheit.

Die Weglängenvariationseinheit variiert periodisch die Weglänge im Referenzzweig und zwar mit einer derartigen Geschwindigkeit, dass Messsysteme mit der hierbei erzeugten Dopplerverschiebung der Strahlungsfrequenz arbeiten können.

Eine Auswertung der Interferenzsignale des "schmalbandigen" Interferometers erlaubt die Weglängenänderungen im Referenzzweig und damit die positionsartige Zuordnung der Signale im Messzweig vorzunehmen. Bekannte Methoden der Positionsbestimmung des Weglängenvariationselements, beispielsweise durch Encoder oder durch optische Hilfsstrahlen zur Ermittlung der Winkelposition bei z. B. einem rotierenden Würfel, werden hierdurch überflüssig.

Durch eine bevorzugte Auswertung der Phasenlage zwischen den beiden Interferenzsignalen, erzeugt von der Strahlungsquelle hoher bzw. kleiner Interferenzlänge, ist eine signifikante Genauigkeitserhöhung bei der augenblicklichen Weglänge des Referenzzweigs möglich. Die Dopplerverschiebungsfrequenzen können hierzu einander angeglichen werden. Eine derartige Angleichung kann elektrisch oder auch optisch erfolgen, wie unten ausgeführt wird.

Durch die Verwendung zweier Interferometer mit Strahlungen unterschiedlicher Kohärenzlängen wird im Messzweig nur Strahlung ausgewertet, welche innerhalb der kurzen Kohärenzlänge liegt. In diffusiven Stoffen, wie z. B. biologischem Gewebe, kann somit wirkungsvoll Streustrahlung eliminiert werden.

Arbeitet die erfindungsgemässe Vorrichtung mit wenigstens einer Strahlungsquelle im sichtbaren Spektralbereich (Wellenlänge zwischen 0,4 µm und 0,7 µm), so kann deren Strahlung zur Visualisierung des Messorts als "Zielstrahl" verwendet werden. Als Strahlungsquelle eignen sich hierzu insbesondere Diodenlaser, He-Ne-Laser etc..

Eine beispielsweise Weglängenvariationseinheit wird unten beschrieben. Die dort beschriebene Einheit weist eine nahezu konstante Änderungsgeschwindigkeit auf. Diese Konstanz ist jedoch für den Messvorgang bzw. dessen Auswertung nicht zwingend.

Weitere Vorteile der Erfindung ergeben sich aus der untenstehenden Beschreibung.

## Kurze Beschreibung der Zeichnungen

Nachfolgend werden Beispiele der erfindungsgemässen Vorrichtung anhand der Zeichnungen näher erläutert. Es zeigen:

Fig. 1 ein optisches Blockschaltbild einer erfindungsgemässen Vorrichtung zur beispielsweisen Verwirklichung des erfindungsgemässen Verfahrens,

Fig. 2 eine beispielsweise Weglängenvariationseinheit mit einem rotierenden Würfel der in **Figur 1** dargestellten Vorrichtung,

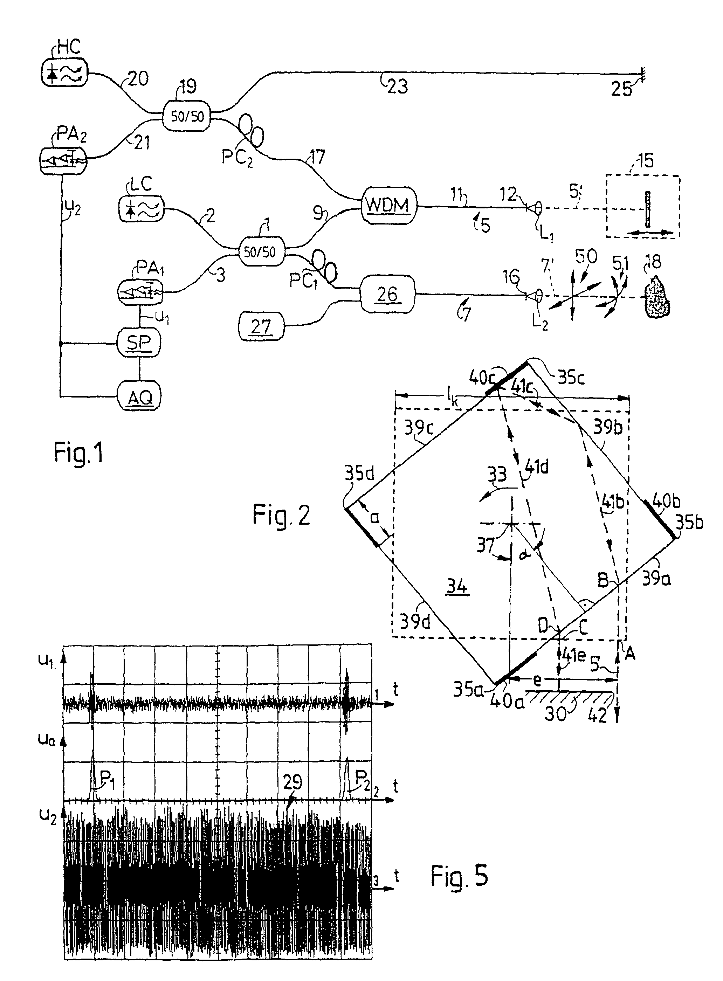

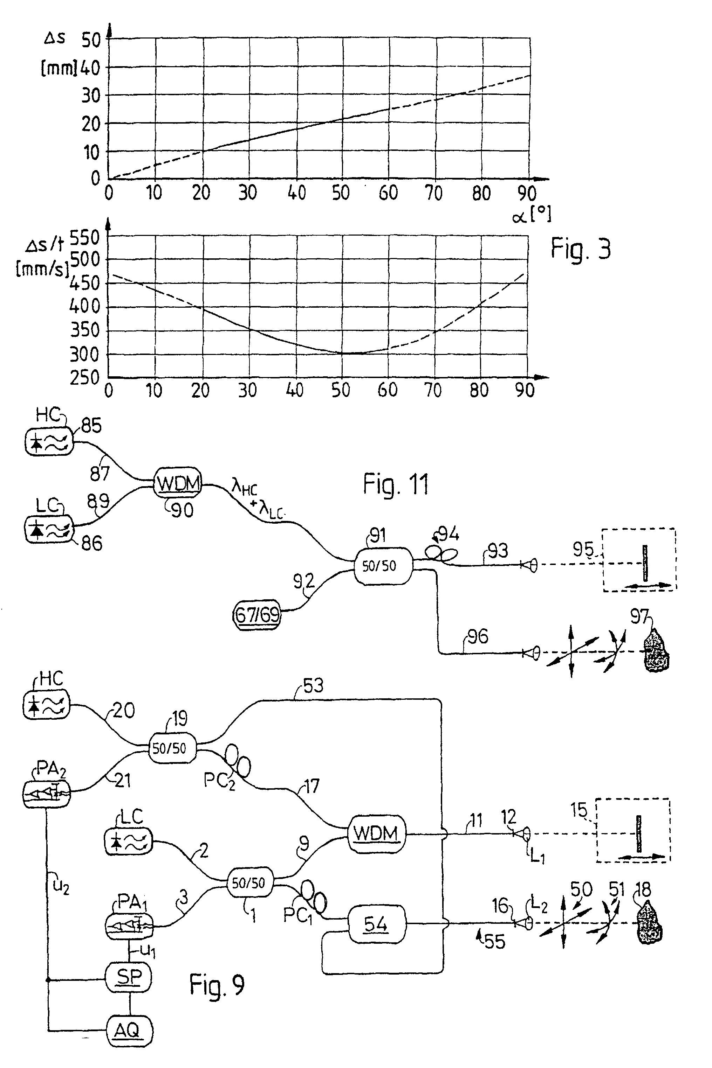

Fig. 3 in der oberen Abbildung eine Weglängendifferenz $\Delta$**s** [mm] über dem Drehwinkel $\alpha$ der in **Figur 2** dargestellten Weglängenvariationseinheit mit einer Seitenlänge $\mathbf{l_k}$ von 30 mm, einem Abstand **e** von 13 mm des einfallenden Strahls **5'** vom Rotationszentrum **37** des Würfels und einem Brechungsindex $\mathbf{n_e}$ des Materials des Würfels von 1,5, wobei die gestrichelten Kurvenwerte Werte angeben, welche mit der in **Figur 2** dargestellten Einheit nicht erreichbar sind, da deren Oberflächen ausgehend von jeweils einer Kante eine teilweise Beschichtung aufweisen; die untere Kurve zeigt die hierzu gehörende Weglängenänderungsgeschwindigkeit in Abhängigkeit des Drehwinkels $\alpha$,

Fig. 4 ein Blockschaltbild der elektronischen Auswerteschaltung der in **Figur 1** dargestellten Vorrichtung,

Fig. 5 eine Darstellung beispielsweiser elektrischer Signale, wie sie mit der in **Figur 4** dargestellten elektrischen Schaltungsanordnung beim Ausmessen eines beispielsweisen Messgegenstands erhältlich sind,

Fig. 6 eine Darstellung einer Schaltungsanordnung für die Signalauswertung, wobei die Dopplerfrequenzen $\mathbf{f}_{\text{Doppler, LC}}$ und $\mathbf{f}_{\text{Doppler, HC}}$ elektronisch einander angeglichen werden,

Fig. 7 ein optisches Blockschaltbild zur Realisierung des erfindungsgemässen Verfahrens mit nur einer Strahlungsquelle,

Fig. 8 eine Variante zu dem in **Figur 7** dargestellten Blockschaltbild,

Fig. 9, 10 und 11 Varianten zu der in **Figur 1** dargestellten optischen Anordnung,

Fig. 12 ein Detektionssystem mit elektrischer Signaltrennung,

Fig. 13 ein Detektionssystem mit optischer Signaltrennung, wie es in den optischen Anordnungen der **Figuren 7** und **8** einsetzbar ist,

Fig. 14 ein Blockschaltbild einer Ausführungsvariante der Vorrichtung gemäss **Figur 1**, welche im Gegensatz zur dortigen Darstellung in einem Auskoppelarm mehrere Detektionseinheiten hat,

Fig. 15 ein Blockschaltbild zu einer weiteren Ausführungsvariante gemäss **Figur 14** jedoch mit mehreren Strahlungsquellen und

Fig. 16    einen Querschnitt durch eine Faser, welche als Anordnung mit mehreren Strahlungsquellen wirkt.

**Wege zur Ausführung der Erfindung**

In **Figur 1** ist ein Ausführungsbeispiel der erfindungsgemässen Vorrichtung zur Messung optischer Eigenschaften transparenter und/oder diffusiver Gegenstände unter Verwendung optischer Symbole blockschaltungsartig dargestellt. Die in **Figur 1** dargestellte optische Anordnung weist zwei optisch gekoppelte Michelson-Interferometer auf. Beide Interferometer sind soweit wie nur möglich unter Verwendung von Strahlungsleitern ausgebildet.

Ein erstes Michelson-Interferometer weist einen Koppler **1** auf, der die Interferometerzweige jeweils zu 50% koppelt. An den Koppler **1** ist über einen Strahlungsleiter **2** eine lichtemittierende Diode [LED] **LC** als Strahlungsquelle mit einer kurzen Kohärenzlänge (breitbandiges Strahlungsspektrum mit beispielsweise einer "Mittenwellenlänge" $\lambda_{LC}$ von 1310 nm) angeschlossen. Die Kohärenzlänge einer derartigen Strahlungsquelle beträgt bei den hier verwendeten "Mittenwellenlängen" bevorzugt 10 μm bis 15 μm. Ein Strahlungsdetektor **PA$_1$** für die Strahlung der Strahlungsquelle **LC** ist über einen Strahlungsleiter **3** mit dem Koppler **1** verbunden. Die Strahlung der Strahlungsquelle **LC** wird mit dem Koppler **1** in einen Referenzzweig **5** und in einen Messzweig **7** annähernd gleichmässig aufgeteilt. Die Strahlung im Referenzzweig **5** läuft über einen Strahlungsleiter **9,** ein Element **WDM,** einen weiteren Strahlungsleiter **11** zu dessen Leiterende **12**. Die aus dem Leiterende **12** austretende Strahlung wird mit einem Abbildungssystem **L$_1$,** welches hier lediglich symbolisch als Einzellinse **L$_1$** dargestellt ist, als freier Strahl **5'** auf eine bzw. in eine Weglängenvariationseinheit **15** geführt. Die Strahlung wird dort reflektiert und läuft den gesamten Weg über die Komponenten **L$_1$, 11, WDM** und **9** wieder zurück und wird im Koppler **1** mit der vom Gegenstand **18** reflektierten Strahlung überlagert. Dabei entsteht ein Interferenzsignal, sofern die optischen Distanzen im Referenzzweig **5** (Distanz zwischen dem Koppler **1** und dem Reflektor **30** der Weglängenvariationseinheit **15**) und im Messzweig **7** (Distanz zwischen dem Koppler **1** und einem Strahlung reflektierenden und/oder streuenden Ort im oder auf dem Gegenstand **18**) innerhalb der Kohärenzlänge der Strahlung **LC** gleich gross sind. Die reflektierte und/oder gestreute Strahlung wird im Koppler **1** zur Strahlungsquelle **LC** und zum kohärent detektierenden Strahlungsdetektor **PA$_1$** hin aufgeteilt, wobei später nur die vom Detektor **PA$_1$** detektierte Strahlung berücksichtigt wird.

Das Element **WDM** ("fiber optic **w**avelength **d**ivision **m**uliplexer, auf deutsch Wellenlängen-Multiplexer bzw. Wellenlängen-Demultiplexer) ist ein optisches Element, welches die im Strahlungsleiter **9** ankomme Strahlung kleiner Kohärenzlänge mit einer Mittenwellenlänge $\lambda_{LC}$ mit der in einem Strahlungsleiter **17** ankommenden Strahlung mit grosser Kohärenzlänge und einer Mittenwellenlänge $\lambda_{HC}$ vereinigt und beide, von der Weglängenvariationseinheit **15** reflektierte Strahlungen wieder in ihre ursprünglichen Leiter **9** bzw. **17** aufteilt.

Die Strahlung im Messzweig **7** durchläuft ausgehend vom Koppler **1** einen Polarisationskontroller **PC$_1$,** wird nach dem Austritt aus dem Strahlungsleiterende **16** mit einer Abbildungsoptik **L$_2$,** welche auch hier durch eine Linse angedeutet ist, in einen freien Strahl **7'** geformt und auf bzw. in den auszumessenden Gegenstand **18** geführt und von dessen Oberflächen oder sonstigen, lagemässig auszumessenden, optischen "Störstellen" reflektiert bzw. gestreut. Der Polarisationskontroller **PC$_1$** dient zur Anpassung des Polarisationszustandes der reflektierten Strahlung vom Gegenstand **18** und derjenigen vom Referenzzweig 5 im Zweig **3** zum Detektor **PA$_1$.**

Ein zweites Michelson-Interferometer hat ebenfalls einen Koppler **19,** der eine Kopplungsaufteilung von jeweils 50% bewirkt. An den Koppler **19** ist über einen Strahlungsleiter **20** ein Distributed-Feedback Laser als Strahlungsquelle **HC** angeschlossen. Die Strahlungsquelle **HC** hat im Gegensatz zur Strahlungsquelle **LC** eine grosse Kohärenzlänge (schmalbandiges Strahlungsspektrum mit beispielsweise einer "Mittenwellenlänge" $\lambda_{HC}$ von 1550 nm). Idealerweise entspricht hier die Kohärenzlänge der Strahlungsquelle **HC** der einfachen bis doppelten maximalen Weglängenänderung in der Einheit **15**. Man wählt vorzugsweise die optische Distanz im unten erwähnten Strahlungsleiter **23** gleich der optischen Weglänge bis zum Reflektor **30** der Weglängenvariationseinheit **15** in deren "Mittelstellung" (die Hälfte der maximalen möglichen Weglängenänderung). Es werden hierdurch störende Echos weiterer Grenzflächen optimal unterdrückt. Derartige Echos können jedoch auch durch Entspiegelungsschichten auf den Grenzflächen der optischen Elemente (Linsen **L$_1$, L$_2$** etc.), sowie der Strahlungsleiterenden (**12, 16** etc.) unterdrückt werden. Eine Unterdrückung kann auch durch schräges Anschleifen der Strahlungsleiterenden erreicht werden. Die tatsächliche Kohärenzlänge dieser Strahlungsquelle **HC** hängt von ihrer Bauart ab; sie liegt typischerweise zwischen 0,1 m und 100 m.

Ein Strahlungsdetektor **PA$_2$** für die Strahlung der Strahlungsquelle **HC** ist über einen Strahlungsleiter **21** mit dem Koppler **19** verbunden. Der Messzweig des zweiten Interferometers weist ausgehend vom Koppler **19** einen Polarisationskontroller **PC$_2$** und den Strahlungsleiter **17** auf und geht dann über das optische Element **WDM** in den bereits oben beschriebenen Referenzzweig **5** über. Ein weiterer Zweig des zweiten Interferometers geht über einen Strahlungsleiter **23** auf einen feststehenden Spiegel **25,** der die Strahlung in den Strahlungsleiter **23** rückreflektiert (Kalibrierzweig). Der feststehende Spiegel **25** ist beispielsweise als metallische Endverspiegelung des Strahlungsleiters **23** ausgebildet. Die vom feststehenden Spiegel **25** reflektierte Strahlung wird der von der Weglängenvariationseinheit **15** reflektierten Strahlung im Koppler **19** überlagert (Erzeugung eines Interferenzsignals). Das überlagerte Signal (Interferenzsignal) wird mit dem Strahlungsdetektor $PA_2$ detektiert. Der Polarisationskontroller $PC_2$ dient zur Anpassung des Polarisationszustandes der reflektierten Strahlung vom Zweig **5** (Referenzzweig) mit dem Polarisationszustand der reflektierten Strahlung vom feststehenden Spiegel **25** im Zweig **21** zum Detektor $PA_2$.

Die beiden oben aufgeführten Strahlungsquellen **LC** und **HC** arbeiten hier beispielsweise im infraroten Bereich, d.h. deren Strahlung ist nicht sichtbar. Um dennoch visuell feststellen zu können, welcher Ort des Gegenstands **18** ausgemessen wird oder ausgemessen werden soll, kann der Messstrahl mit einem sichtbaren Strahl vereinigt werden. Diese Vereinigung erfolgt über einen Koppler **26**, mit dem die Strahlung eines sichtbaren Lasers, beispielsweise eines He-Ne-Lasers **27,** eingekoppelt wird. Als Koppler kann auch eine dem **WDM** ähnliche Einheit verwendet werden.

Die unten beschriebene Weglängenvariationseinheit **15** erzeugt nun eine (nahezu konstante) Weglängenänderung über ein Zeitintervall. Diese nahezu konstante periodische Weglängenänderung ist jedoch für das erfindungsgemässe Messverfahren nicht zwingend. Infolge dieser Weglängenänderung ergibt sich eine Dopplerfrequenz $f_{Doppler, HC}$ bzw. $f_{Doppler, LC}$ der jeweiligen von der Weglängenvariationseinheit **15** reflektierten Strahlung mit den Wellenlängen $\lambda_{HC}$ und $\lambda_{LC}$ von

$$f_{Doppler, HC} = 2 \cdot V_{scan} / \lambda_{HC}$$

bzw.

$$f_{Doppler, LC} = 2 \cdot V_{scan} / \lambda_{LC}$$

wobei $v_{scan}$ die Geschwindigkeit ist, mit der die Weglänge durch die Weglängenvariationseinheit **15** geändert wird. Ist $v_{scan}$ konstant, so ergibt sich auch eine konstante Dopplerfrequenz $f_{Doppler}$. Sollten Nichtlinearitäten in der Weglängenvariationsgeschwindigkeit $v_{scan}$ auftreten, so werden beide Dopplerfrequenzen $f_{Doppler, HC}$ und $f_{Doppler, LC}$ im gleichen Sinne betroffen. Diese Schwankungen werden mittels der unten aufgeführten Differenzenbildung in der elektronischen Schaltungsanordnung **SP** durch eine Angleichung der beiden Dopplerfrequenzen $f_{Doppler,HC}$ und $f_{Doppler, LC}$ minimiert, gemäss

$$f_{Doppler, LC} - f_{Doppler, HC} = f_{Doppler, LC} (1 - k); \quad k = f_{Doppler, HC} / f_{Doppler, LC} = \lambda_{LC} / \lambda_{HC}.$$

Als Weglängenvariationseinheit **15** kann ein kontinuierlich verschiebbarer Spiegel verwendet werden. In **Figur 2** ist eine Anordnung einer Weglängenvariationseinheit **15,** wie sie beispielsweise in der WO 96/35100 beschrieben ist, mit einem Reflektor **30** in gegenüber **Figur 1** vergrösserter Darstellung gezeigt. Die mit ausgezogenen Strichen dargestellte Darstellung zeigt einen rotierenden Würfel der Einheit **15** gegenüber einer Grundstellung (gestrichelt) um einen Winkel $\alpha$ verdreht. Der Würfel ist durch einen nicht dargestellten Antrieb in Rotation, gemäss Pfeil **33,** versetzbar. Die Querschnittsfläche **34** des Würfels, in welcher der Strahl **5'** verläuft [innerhalb des Würfels ist der Strahl **5'** mit **41b, 41c** und **41d** gekennzeichnet], weist vier Ecken **35a** bis **35d** auf und ist in dem hier ausgewählten Beschreibungsbeispiel quadratisch ausgebildet, d. h. der "Würfel" ist ein gerader Zylinder mit quadratischer Grundfläche. Die Rotationsachse **37** ist mit der Achse des Zylinders identisch. Jede Zylindermantelfläche **39a** bis **39d** des Würfels ist mit einer teilweisen Beschichtung **40a** bis **40d** versehen, welche derart ausgewählt ist, dass sie die im Würfel verlaufenden Strahlen **41c** bzw. rückreflektierten Strahlen **41d** der Strahlung optimal reflektiert. Am Reflexionsort des Strahls **41b** bzw. des rückreflektierten Strahls **41c** wird an der hier beispielsweise gezeichneten Wand **39b** keine Reflexionsbeschichtung benötigt, da hier Totalreflexion erfolgt. Die Beschichtungen **40a** bis **40d** beginnen jeweils an den Ecken (Kanten) **35a** bis **35d** und erstrecken sich über eine Distanz **a** in die betreffende Seitenfläche **39a** bis **39d** hinein. Ausgehend von jeder Kante **35a** bis **35d** ist jeweils nur eine der beiden anstossenden Seiten beschichtet, und zwar jeweils nur immer diejenige, auf welcher der reflektierte mit dem einfallenden Strahl einen spitzen Winkel bildet.

Der in den Würfel eintretende Strahl **5'** ist derart geführt, dass er gerade an der in **Figur 2** rechten Kante **42** des Reflektors **30** vorbeiführbar ist. Ein Abstand **e** von der Reflektorkante **42** ist gerade so gross gewählt, dass er nur geringfügig kleiner als die halbe Würfelkante ist. Bei dem hier gewählten Zahlenbeispiel mit einer Flächenbreite $l_k$ von 30 mm, wird der Strahl **5'** in einem Abstand **e** von 13 mm von der zentrischen Rotationsachse **37** und in einem Abstand von etwa 3 mm von der Reflektorkante **42** entfernt eingestrahlt.

Eine Weglängenveränderung $\Delta$**s** infolge der Rotation des Würfels setzt sich nun aus dem doppelten Weg der sich ändernden Weglängen der Strahlen **5'** sowie **41a** bis **41e** zusammen, Für die Strahlen **41b** bis **41d** ist zu beachten, dass deren Weglängen durch den Brechungsindex $n_e$ des Mediums, in dem sie verlaufen, erhöht sind. Die Weglänge **s** ist abhängig vom Drehwinkel $\alpha$, vom Abstand des Strahleintritts **e,** vom Brechungsindex $n_e$ und der Flächenbreite

$l_k$ der Flächen **39a** bis **39d**. Die unten berechnete Weglänge **s** beginnt und endet an der gestrichelten Geraden **A-D** in **Figur 2**.

$$s = n_e \cdot (\underline{41b} + \underline{41c} + \underline{41d}) + \underline{CD} + \underline{AB}$$

Da $\underline{41b} + \underline{41c} = \underline{41d}$ ist, folgt

$$s = 2 \cdot n_e \cdot \underline{41d} + \underline{CD} + \underline{AB},$$

wobei die Strecke $\underline{41d} = l_k \cdot [1 - (\sin \alpha)2/n_e^2]^{-\frac{1}{2}}$
 die Strecke $\underline{CD}$

$$\underline{CD} = \frac{Z_{CD,1} \cdot Z_{CD,2}}{N_{CD}}$$

mit

$$N_{CD} = n_e \cdot [1 - \sin\alpha 2/n_e^2]^{\frac{1}{2}} + \frac{1}{2}[l_k - l_k \cdot \tan(\alpha/2)] \cdot \tan\alpha,$$

$$Z_{CD,1} = -2 \cdot \sin\alpha^2 \cdot (l_k - n_e \cdot \sin\alpha^{-1} \cdot (1 - \sin\alpha^2/n_e^2)^{\frac{1}{2}},$$

$$Z_{CD,2} = [l_k/2 + l_k \cdot \tan(\alpha/2)/2 - \cos\alpha^{-1} \cdot [l_k/2 - l_k \cdot \tan(\alpha/2)/2]$$

und die Strecke $\underline{AB} = \frac{1}{2} \cdot [l_k - (l_k \cdot \tan(\alpha/2)] \cdot \tan \alpha$.

Die Parameter **e**, $l_k$ und $n_e$ lassen sich nun derart optimieren, dass für einen vorgegebenen Winkelbereich $\alpha$ eine annähernd lineare Weglängenänderungsgeschwindigkeit $v_{scan}$ als Wegdifferential erreichbar ist, wie die **Figuren 3** zeigen. Die Weglängenänderung ergibt sich zu

$$v_{scan} = \frac{ds}{dt} = w \cdot \frac{ds}{d\alpha},$$

wobei **w** die Winkelgeschwindigkeit des rotierenden Würfels ist. Die ermittelte zeitliche Weglängenänderung und die mit den Strahlungsdetektoren **PA₁** und **PA₂** messbare Differenzfrequenz $f_{Doppler}$ sind über die Relation

$$f_{Doppler} = \frac{2 \cdot f_o \cdot v_{scan}}{c}$$

miteinander verknüpft, wobei $f_0$ die ursprüngliche Strahlungsfrequenz der Strahlungsquelle **HC** bzw, **LC** und **c** die Lichtgeschwingigkeit ist.

Die Weglängenänderungsgeschwindigkeit $v_{scan}$ ergibt sich zu

$$v_{scan} = \frac{Z_{v,1} - Z_{v,2} \cdot Z_{v,3}}{N_{v,1}} - \frac{Z_{v,4} \cdot Z_{v,5}}{N_{v,2}} - Z_1 - 2 \cdot \sin\alpha^2/N_{v,2} \cdot [Z_{v,3} \cdot \cos\alpha + Z_{v,6} \cdot Z_{v,7} \cdot (Z_{v,8} - Z_{v,6})]$$

mit

$$Z_{v,1} = \frac{2 \cdot l_k \cdot \cos\alpha \cdot \sin\alpha}{n_e[1 - \sin\alpha 2/n_e^2]^{3/2}} + 2 \cdot \cos\alpha^{-2} \cdot \frac{1}{2} \cdot l_k[1 - \tan(\alpha/2)];$$

$$Z_{v,2} = 2 \cdot \cos\alpha \cdot \sin\alpha^3 \cdot [l_k - n_e \cdot \sin\alpha^{-1} \cdot [1-\sin\alpha^2/n_e^2]^{\frac{1}{2}};$$

$$Z_{v,3} = l_k/2 \cdot [(1 + \tan(\alpha/2) - \cos\alpha^{-1} \cdot (1 - \tan(\alpha/2)];$$

$$N_{v,1} = n_e \cdot (1 - \sin\alpha^2/n_e^2)^{3/2};$$

$$Z_{v,4} = 4 \cdot \cos\alpha \cdot \sin\alpha \cdot (l_k - n_e \cdot \sin\alpha^{-1} \cdot (1-\sin\alpha^2/n_e^2)^{\frac{1}{2}}$$

$$Z_{v,5} = l_k/2 \cdot [1+\tan(\alpha/2) - \cos\alpha^{-1} \cdot (1-\tan(\alpha/2)];$$

$$N_{v,2} = n_e \cdot (1-\sin\alpha^2/n_e^2);$$

$$Z_1 = \tfrac{1}{2} \cdot [l_k \cdot \sin(\alpha/2)^{-2} \cdot \tan\alpha];$$

$$Z_{v,6} = n_e \cdot \cot g\alpha \cdot \cos\alpha^{-1} \cdot [1-\sin\alpha^2/n_e^2];$$

$$Z_{v,7} = Z_{v,3} - n_e \cdot \cos\alpha^{-1} \cdot [1-\sin\alpha^2/n_e^2]^{\frac{1}{2}};$$

$$Z_{v,8} = l_k/4 \cdot [\sin(\alpha/2)^{-2} + (\sin(\alpha/2)^{-2} \cdot \sin\alpha^{-1});$$

$$Z_{v,9} = l_k/2 \cdot \sin\alpha^{-1} \cdot \tan\alpha \cdot [1-\tan(\alpha/2)].$$

Um einen kompakten Aufbau zu erreichen, wird der Abstand des Reflektors **30** von der Rotationsachse **37** des Würfels gerade so gross gewählt, dass ein störungsfreies Vorbeirotieren der Kanten **35a - 35d** gegeben ist.

Aus den obigen Berechnungen ist ersichtlich, dass die Weglängenänderungsgeschwindigkeit $v_{scan}$ und damit auch die Dopplerfrequenzen $f_{Doppler, HC}$ und $f_{Doppler, LC}$ vom Brechungsindex $n_e$ und vom Abstand des Strahleintritts **e** bzw. vom Drehwinkel $\alpha$ abhängen. Unter Ausnutzung der Dispersion des Brechungsindexes $n_e$ und/oder durch Vorschalten dispersiver Elemente (Gitter, Prismen, ...), mit denen verschiedene Strahleintritte (Variation von **e**) für verschiedene Wellenlängen erzeugt werden können, kann erreicht werden. dass die jeweilige Dopplerfrequenz für verschiedene Wellenlängen $\lambda_{HC}$ und $\lambda_{LC}$ gleich ausfällt.

Wird auf die Beschichtungen **40a** bis **40d** verzichtet, so kann gegenüber der Darstellung in **Figur 2** ein grösserer Drehwinkelbereich $\Delta\alpha$ des Würfels ausgenützt werden. Die für die Interferenz zur Verfügung stehende Intensität ist dann allerdings geringer, aber noch ausreichend, da aufgrund der guten Linearität der Wegdifferenzänderung $\Delta s_{scan}$/ **t** eine gute Filtermöglichkeit gegeben ist.

Mehrfachreflexionen, welche neben den in **Figur 2** gezeigten Strahlwegen liegen, stören nicht, da sie aufgrund der guten Blendenwirkung der Einkopplung in den Strahlungsleiter **5** nicht in diesen gelangen.

Im Referenzzweig **5** kann die Strahlung auch vollständig in einem Strahlungsleiter geführt werden. Die Weglänge kann in diesem Fall variiert werden, indem z.B. ein Teil des Strahlungsleiters gedehnt oder komprimiert wird. Wird der Strahlungsleiter z.B. um eine Trommel mit piezokeramischem Material gewickelt und der Durchmesser der Trommel durch Anlegen einer sinusförmigen elektrischen Spannung verändert, so erhält man ebenfalls die gewünschte periodische Weglängenänderung. Das Strahlungsleiterende kann mit einer metallischen oder dielektrischen Reflexionsschicht bedampft werden, um die Strahlungsverluste im Referenzzweig **5** klein zu halten.

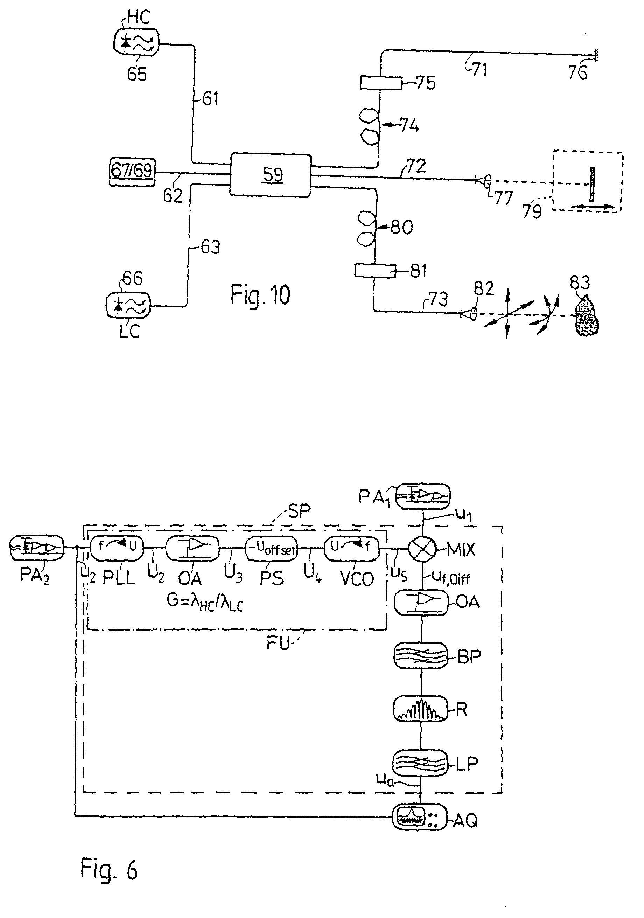

Die Verarbeitung der von den Strahlungsdetektoren **PA₁** und **PA₂** detektierten Signale wird anhand des Blockschaltbildes in **Figur 4** erklärt. Das Interferenzsignal, erzeugt mit der Strahlungsquelle **HC** mit der Dopplerfrequenz $f_{Doppler, HC}$, wird, wie bereits oben ausgeführt, vom Strahlungsdetektor **PA₂** detektiert und das Interferenzsignal, erzeugt mit der Strahlungsquelle **LC** mit der Dopplerfrequenz $f_{Doppler, LC}$, vom Strahlungsdetektor **PA₁.** Durch die Detektion werden die Signale in eine oszillierende Spannung $u_2$ bzw. $u_1$ umgewandelt.

**Figur 5** zeigt das mit dem Strahlungsdetektor **PA₁** gemessene Interferenzsignal **u₁** der Strahlungsquelle **LC** (obere Spur) sowie als mittlere Spur dasselbe Signal nach Aufbereitung durch eine Gleichrichtereinheit **R** und einen Tiefpass **LP.** Die untere Spur in **Figur 5** zeigt das mit dem Strahlungsdetektor **PA₂** gemessene Interferenzsignal **u₂** der Strahlungsquelle **HC.**

Die beiden Detektoren **PA₁** und **PA₂** sind bevorzugt als kohärente Detektionssysteme ausgebildet. Die vom jeweiligen Detektor **PA₁** bzw. **PA₂** detektierte Strahlung setzt sich zusammen aus einem konstanten Strahlungsanteil $I_{ref}$ vom Referenzzweig **5**, einem konstanten Strahlungsanteil $I_{M/K}$ vom Messzweig **7** bzw. aus dem Kalibrierzweig **23** und einem zeitlich variablen Strahlungsinterferenzterm $I_{if}$ :

$$I_{if} = 2 \cdot (I_{ref} \cdot I_{M/K})^{1/2} \cdot |\gamma(\tau)| \cdot \cos(\omega\tau + \xi),$$

wobei $\gamma$ der komplexe Korrelationsgrad der Feldstärken der beiden Strahlungsanteile $I_{ref}$ und $I_{M/K}$, $\tau$ die Laufzeitdifferenz der Strahlung in den beiden Interferometerzweigen, $\omega$ die Kreismittenfrequenz der Strahlungsquelle **LC** bzw. **HC** und $\xi$ eine konstante Phase bedeuten. Die kohärente Detektion besteht darin, dass die von den Strahlungsanteilen $I_{ref}$ und $I_{M/K}$ stammenden Gleichstromanteile mit einem Hoch- oder Bandpassfilter weggefiltert werden und dass die Intensität der jeweiligen Strahlungsquelle **LC** bzw. **HC** so gross gewählt wird, dass der vom Interferenzterm $I_{if}$ stammende Signalstrom grösser wird als der aus dem (thermischen) Eigenrauschen des Detektionssystems stammende Rauschterm. Hierdurch wird eine auf das Schrotrauschen der Strahlung begrenzte Empfindlichkeit erreicht. Im Unterschied zu den in der sogenannten "Weisslicht-Interferometrie" üblichen Auswerteverfahren wird mit dieser kohärenten Detektion die Empfindlichkeit zur Messung sehr schwacher Signale stark verbessert und der Kontrast bei der Ermittlung der Amplitude der Interferenzsignale wesentlich verbessert.

Der Abstand der Nadeln in der unteren Spur ergibt als Längennormal jeweils eine halbe Wellenlänge der Strahlung der Strahlungsquelle **HC.** Die "Pulse" **P₁** und **P₂** stellen Punkte im oder auf dem Gegenstand **18** dar, an denen Strahlung reflektiert wird. Hier sind es die vordere bzw. die hintere Oberfläche des Gegenstands **18.** Aus der Anzahl Nadeln **29** zwischen den beiden Pulsen **P₁** und **P₂,** multipliziert mit der halben Wellenlänge der Strahlung der Strahlenquelle **HC,** ergibt sich der Abstand der beiden Gegenstandsoberflächen.

Ein Auszählen der Nadeln **29** und deren Zuordnung zu den Pulsen **P₁** und **P₂** kann selbstverständlich mit einer automatischen Auswertung erfolgen.

Bei der hier beschriebenen Auswertung erfolgt die Distanzmessung zwischen **P₁** und **P₂** mit einer Genauigkeit im Mikrometerbereich. Die Genauigkeit ist im wesentlichen durch die Breite der Pulse **P₁** bzw. **P₂** gegeben. Sie ist nach unten begrenzt durch den Wert der halben Wellenlänge der Strahlungsquelle **HC.**

Eine Genauigkeitserhöhung lässt sich erreichen, indem die "Schwerpunkte" der Pulse **P₁** und **P₂** mit entsprechenden mathematischen Algorithmen ermittelt und die Orte der "Schwerpunkte" zwischen den Maxima der Interferenzsignale **u₂** interpoliert werden. Es kann aber auch mit den Interferenzsignalen **u₁** gearbeitet und deren Phasenlage gegenüber dem Signal **u₂** bestimmt werden. Auf Kosten eines kleineren Signal-Rausch-Verhältnisses werden dabei wesentlich höhere Genauigkeiten (im Bereich von $\lambda/10$ bis $\lambda/100$) erreicht.

Durch die Variation der Distanz im Referenzzweig wird bei kontinuierlicher Detektion die Reflexion im Gegenstand als Funktion der Tiefe gemessen. Derartige Reflexionsprofile können auch in stark streuenden (diffusiven) Gegenständen, z.B. in biologischen Objekten (menschliches, tierisches oder pflanzliches Gewebe, ...) gemessen werden. Aufgrund der kohärenten Detektion wird der nichtkohärente Anteil der gestreuten Strahlung nicht gemessen. Aus den Reflexionsprofilen lassen sich optische Eigenschaften des Gegenstands, wie Gruppenbrechungsindex, Absorptionskoeffizient der kohärenten Strahlung etc. ermitteln. Wird die Polarisation der Strahlung z.B. unter Verwendung von polarisationserhaltenden Strahlungsleitern genau kontrolliert, so können unter Zuhilfenahme von z.B. Kompensatoren auch polarisationsabhängige Eigenschaften (Doppelbrechung, Drehungsvermögen etc.) bestimmt werden.

Das Abbildungssystem **L₂** kann auch derart ausgebildet werden, dass der austretende freie Strahl **7'** in der Papierebene der **Figur 1** sowie in einer hierzu senkrechten Ebene analog der Pfeile **50** verschiebbar oder räumlich analog der Pfeile **51** verschwenkbar ist. In beiden Fällen ist ein Abtasten des Gegenstands **18** möglich. Da die Schwenkbzw. Verschiebelage des freien Strahls **7'** und der Abstand des Gegenstands **18** vom Abbildungssystem **L2** bekannt sind, kann der Gegenstand **18** (sowie sein Inneres) optisch hiermit ausgemessen werden.

Bei Phasenmessung ist es von Vorteil, wenn die Interferenzsignale **u₁** und **u₂** dieselbe Frequenz aufweisen. Eine Schaltungsanordnung, welche dies ermöglicht und welche gleichzeitig Frequenzvariationen, verursacht durch nichtlineare Weglängendifferenzänderungen im Referenzzweig **5** (Weglängenvariationseinheit **15),** eliminiert, ist in **Figur 6** dargestellt.

Mittels eines elektronischen Elements **PLL** (phase-locking loop) wird die oszillierende Spannung **u₂** entsprechend der Oszillationsfrequenz in eine Spannung **U₂** umgeformt. Die Spannung **U₂** wird mit einem Operationsverstärker **OA** mit konstanter Verstärkung in eine Spannung **U₃** verstärkt. Der konstante Verstärkungsfaktor **G** ist auf das Verhältnis zwischen der Mittenwellenlänge der Strahlungsquelle **HC** und derjenigen der Strahlungsquelle **LC** eingestellt:

$$G = \lambda_{HC} / \lambda_{LC} = 1/k$$

Der derart erhaltenen Spannung $U_3$ wird eine konstante Spannung - $U_{offset}$ zur Bildung einer Spannung $U_4$ überlagert. Diese Spannung $U_4$ wird durch einen spannungskontrollierten Oszillator **VCO** (voltage-controlled oscillator) in eine oszillierende Spannung $u_5$ verwandelt.

Mit dem elektrischen Signal $u_1$ des Strahlungsdetektors **PA1,** erzeugt mit der Interferenzstrahlung der Strahlungsquelle **LC,** und der oszillierenden Spannung $u_5$ wird ein Differenzsignal $u_{f,Diff}$ mit einem elektronischen Mixer **MIX** gebildet. Die Frequenz dieser Spannung $u_{f,Diff}$ ist:

$$f_{Diff} = f(u_1) - f(u_5)$$

$$= f_{Doppler, LC} - F(U_3 - U_{offset})$$

$$= f_{Doppler, LC} - F[U_2 \cdot (\lambda_{HC} / \lambda_{LC}) - U_{offset}]$$

$$= f_{Doppler, LC} - f_{Doppler, HC} \cdot (\lambda_{HC} / \lambda_{LC}) + F(U_{offset})$$

$$= v_{scan} / \lambda_{LC} - (v_{scan} / \lambda_{HC}) \cdot \lambda_{HC}/\lambda_{LC} + F(U_{offset})$$

$$= v_{scan} / \lambda_{LC} - v_{scan} / \lambda_{LC} + F(U_{offset}) = F(U_{offset})$$

wobei $f(u_x)$ die Frequenz der jeweiligen oszillierenden Spannung $u_x$ kennzeichnet und $F(U_x)$ die jeweilige Transferfunktion der elektronischen Elemente **PLL** und **VCO,** welche gleichgesetzt werden.

Mit der Schaltungsanordnung gemäss **Figur 6** wird eine synthetische Frequenz $f_3 = G \cdot f_2$ gebildet, derart, dass ein neues Differenzsignal konstant bleibt:

$f_4 = f_3 - f_1.$

Ausgehend von den oben gemachten mathematischen Überlegungen ergibt sich, dass die Frequenz der Weglängenänderungen in das Messverfahren nicht eingeht. Aufgrund dieser Überlegung wird dem Operationsverstärker **OA** ein Schmalbandfilter **BP** mit der Mittenfrequenz $f_{Diff}$ nachgeschaltet werden. Durch die Schmalbandigkeit des Bandpasses **BP** ergibt sich eine signifikante Erhöhung der Messempfindlichkeit.

Da hier das Differenzsignal zeitlich konstant bleibt, können auch Reflexionsprofile unter Verwendung einer Weglängenvariationseinheit ermittelt werden, deren Weglängenänderung über der Zeit stark nicht linear ist (=keine konstante Weglängenänderungsgeschwindigkeit). Die oben ausgeführte Strahlführung in einem rotierenden Würfel (**Figur 2**) kann z. B. stark vereinfacht werden, indem ein z.B. ein rotierendes Parallelepiped (Würfel, Rhomboeder) oder eine rotierende Glasplatte vor einem festen Spiegel in Transmission durchstrahlt wird, wobei der Strahl durch den Spiegel in sich zurück reflektiert wird. Weitere Vorrichtungen wie sinusförmig vibrierende Spiegelmembranen, feste Glasplatten oder Würfel kombiniert mit rotierenden Spiegeln, die bisher wegen einer starken Dopplerfrequenzvariation nicht verwendet werden konnten, können jetzt mit dem oben beschriebenen Verfahren verwendet werden.

Falls die Wellenlängen der beiden Strahlungsquellen gleich gross gewählt werden ($\lambda_{HC} = \lambda_{LC}$; **k = 1**), durchlaufen beide Dopplersignale bei auftretenden Nichtlinearitäten in Weglängenvariationsgeschwindigkeit $v_{scan}$ dieselben Frequenzänderungen, wie bereits oben erwähnt. Die Differenz der Dopplerfrequenzen $f_{Doppler}$ ist für alle Positionen des reflektierenden Spiegels **30** der Weglängenvariationseinheit **15** Null. Es kann somit auf die Frequenzumwandlung des detektierten Signals verzichtet werden. Die in **Figur 6** dargestellte Schaltungsanordnung kann vereinfacht werden, indem der mit **FU** bezeichnete Teil zur Frequenzumwandlung weggelassen wird.

Senden beide Strahlungsquellen Strahlung mit derselben Wellenlänge aus, kann zur Kopplung der beiden Interferometer ein normaler Fiberkoppler von z.B. 50/50 anstelle des Wellenlängenmultiplexers **WDM** in **Figur 1** verwendet werden.

Eine Strahlung grosser Kohärenzlänge kann auch durch eine wellenlängenselektive Filterung aus einer breitbandigen Strahlung mit kurzer Kohärenzlänge erhalten werden. Eine einfache experimentelle Anordnung ist in **Figur 7** dargestellt. Hier wird die breitbandige Strahlung einer Strahlungsquelle **S** mit einem Strahlungsleiter **107** zu einem Fiberkoppler **109** geführt. Von diesem Koppler **109** geht ein Teil der Strahlung (annähernd die Hälfte) über einen Referenzzweig **110** analog zur Darstellung in **Figur 1** auf eine Wegvariationseinheit **15.** Vom Koppler **109** geht der andere Strahlungsteil über einen Polarisationskontroller **PC1** zu einer Einheit **111,** welche analog zu dem in **Figur 1** eingesetzten **WDM** ausgebildet ist. Auf den anderen Eingang der Einheit **111** ist die sichtbare Strahlung eines Ziellasers **112** geführt. Auf den Ziellaser **112** kann verzichtet werden, wenn die Strahlung der Strahlungsquelle **S** im sichtbaren Spektralbereich liegt. Der Ausgang der Einheit **111** führt zum Messzweig **113.** Der Messzweig hat einen an die Einheit

111 angeschlossenen Strahlungsleiter **114,** an dessen der Einheit **111** abgewandten Ende ein "schmalbandiger" Reflektor **115** als frequenzselektive Einheit angeordnet ist. Als frequenzselektive Einheit kann z.B. ein "Faser Bragg Grating" verwendet werden. Der Maximalwert der Reflexion liegt hier innerhalb der spektralen Bandbreite $\Delta\lambda_S$ der Strahlungsquelle **S.** Die "Mittenwellenlänge" liegt beispielsweise im Maximum der Emissionskurve $\lambda_S$ der Strahlungsquelle **S.** Die Bandbreite $\Delta\lambda_B$ der frequenzselektiven Einheit **115** wird so gewählt, dass die Kohärenzlänge $L_B$ der durch den Reflektor **115** reflektierten Strahlung grösser ist als der doppelte Abstand **D** zwischen dem Reflektor **115** und dem Messort im Gegenstand **18.** Zwischen der Bandbreite $\Delta\lambda_B$ und der Kohärenzlänge $L_B$ besteht unter Annahme einer spektralen Intensitätsverteilung mit Gaussprofil die Beziehung

$$L_B = \frac{4 \cdot \ln 2}{\pi} \cdot \frac{\lambda_B^2}{\Delta\lambda_B}.$$

Es muss somit die Bandbreite $\Delta\lambda_B$ zu

$$\Delta\lambda_B \leq \frac{2 \cdot \ln 2}{\pi} \cdot \frac{\lambda_S^2}{L_B}$$

gewählt werden. Ist diese Bedingung erfüllt, so interferiert die vom Reflektor **115** reflektierte Strahlung mit der Strahlung des Referenzzweiges **110.** Die vom Reflektor **115** nicht reflektierte breitbandige Strahlung wird über die Linse **L₂** auf bzw. in den Gegenstand **18** geführt und dort reflektiert. Diese breitbandige reflektierte Strahlung interferiert mit der Strahlung aus dem Referenzzweig **110,** wenn die optischen Distanzen im Referenzzweig **110** und im Messzweig **113** gleich lang sind. Die interferierenden Strahlungen werden über einen Strahlungsleiter **116** und ein optisches Abbildungssystem **L5** auf einen wellenlängenselektiven Strahlteiler **IF** (z.B. ein Interferenzfilter) geführt, der die schmalbandige Strahlung auf einen Detektor **PA₂** leitet und die breitbandige Strahlung zum Detektor **PA₁** reflektiert.

Die Transmissionskurve des als Strahlteiler **IF** wirkenden Interferenzfilters muss mit der Reflexionskurve des Reflektors (Bragg Gitter) **115** übereinstimmen, damit lediglich minimale Verluste sich ergeben.

Anstelle des Interferenzfilters als Strahlteiler **IF** können auch andere wellenlängenselektive Filter, wie z.B. Bragg-Gitter, verwendet werden. Die Strahlung am Ausgang des Strahlungsleiters **116** kann aber auch mit einem Detektor detektiert werden, wobei dann die elektrischen Signale der beiden Interferenzen mit elektrischen Filtern getrennt werden müssen.

Die in **Figur 7** dargestellte Anordnung hat den Nachteil, dass das Spektrum der Strahlungsquelle **S** durch den wellenlängenselektiven Reflektor **115** modifiziert wird. Es könnte hierdurch die Dynamik oder die Auflösung bei der Messung des Reflexionsprofils des Gegenstands beeinträchtigt werden.

Dieser Nachteil kann behoben werden, indem z.B. unter Zuhilfenahme eines weiteren Kopplers **119** die Strahlungswege zwischen schmalbandiger und breitbandiger Strahlung von Anfang an aufgetrennt werden. Eine entsprechende Anordnung ist in **Figur 8** dargestellt.

Sollte die in den Anordnungen der **Figuren 7** und **8** verwendete Strahlungsquelle **S** empfindlich gegenüber einer rückgekoppelten Strahlung sein (wenn beispielsweise ein Wellenleiterverstärker als Strahlungsquelle **S** eingesetzt wird), so kann die Rückkopplung mit einer an geeigneter Stelle (z.B. am Ausgang der Strahlungsquelle **S)** platzierten optischen Diode unterdrückt werden.

Die wellenlängenselektive (frequenzselektive) Einheit **115** kann auch direkt an den Eingang und/oder den Ausgang der Strahlungsquelle **S** gelegt oder auch gleich in sie integriert werden (z.B. ein Faserlaser mit Spontanemission). Die Bandbreite der Strahlung mit der grossen Kohärenzlänge muss nur den oben aufgeführten Bedingungen genügen.

Eine weitere Ausführungsvariante zu der in **Figur 1** dargestellten optischen Anordnung zeigt **Figur 9.** Hier wird der Zweig **23,** hier mit **53** gekennzeichnet, nicht mehr auf den Spiegel **25** geführt, sondern über ein optisches Element **54** in den Messzweig, hier mit **55** gekennzeichnet, eingekoppelt. Das Element **54** ist analog zu dem optischen Element **WDM** ausgebildet. Das Strahlungsleiterende **16** ist mit einer dichroischen Reflexionsschicht derart versehen, dass die Strahlung der Strahlungsquelle **HC** reflektiert, diejenige der Strahlungsquelle **LC** jedoch transmittiert wird (=Übernahme der Funktion des Spiegels **25).**

Ein weiterer Vorteil dieser Anordnung ergibt sich bei einem langen Strahlungsleiter **55** zum auszumessenden Gegenstand **18**: Die Strahlungen aus den Strahlungsquellen **HC** und **LC** durchlaufen dieselben Wegstrecken und allfällige Änderungen der optischen Distanz durch z.B. Druck- und/oder Temperaturänderungen werden bei der oben beschriebenen Auswertung der Distanzen direkt kompensiert.

In dem oben beschriebenen Ausführungsbeispiel sind die Mittenwellenlängen $\lambda_{HC}$ und $\lambda_{LC}$ der beiden Strahlungsquellen **HC** und **LC** unterschiedlich:

$$\lambda_{HC} \neq \lambda_{LC}$$

In diesem Fall können Gruppendispersionseffekte auftreten. Diese Dispersionseffekte können vermieden bzw. minimiert werden, wenn die Summe der optischen Weglängen [$\Sigma n_i \cdot l_i$, wobei $l_i$ die geometrische Länge des betreffenden, i-ten Elements und $n_i$ dessen Gruppen-Brechungsindex bei der betreffenden Wellenlänge ist] in beiden Interferometerarmen gleich gross ist.

Wird eine der beiden Strahlungsquellen derart ausgewählt, dass ihre Strahlung im sichtbaren Bereich liegt, so kann auch hier auf den "Ziellaser" **27** und damit auch auf den Koppler **26** verzichtet werden **(Figuren 9** bis **11).** Hierdurch ist eine signifikante Vereinfachung der Anordnung erzielbar.

Wird das Element **54** als Koppler analog zum Koppler **19** ausgebildet und Strahlungsquellen mit gleicher Mittenwellenlänge [$\lambda_{HC} = \lambda_{LC}$] jedoch unterschiedlicher Kohärenzlänge verwendet, so können die oben aufgeführten Dispersionseffekte ausgeschlossen werden.

Eine weitere Variante zum optischen Aufbau der **Figur 1** ist in **Figur 10** dargestellt. Hier wird anstelle der beiden Koppler **1** und **19** ein Dreifachkoppler **59** verwendet. Von der linken Seite des Kopplers **59** in **Figur 7** gehen drei Strahlungsleiter **61, 62** und **63** ab. Der Strahlungsleiter **61** führt zu einer Strahlungsquelle **65** (analog der Strahlungsquelle **HC)** mit der Mittenwellenlänge $\lambda_{HC}$ und grosser Kohärenzlänge sowie der Strahlungsleiter **63** zu einer Strahlungsquelle **66** (analog der Strahlungsquelle **LC)** mit der Mittenwellenlänge $\lambda_{LC}$ und kleiner Kohärenzlänge. Der Strahlungsleiter **62** ist mit einem untenbeschriebenen Detektionssystem **67** bzw. **69** verbunden, welches entweder mit einem elektrischen oder einem optischen Verfahren eine Signaltrennung vornimmt. Von der in **Figur 10** rechten Seite des Kopplers **59** gehen drei Strahlungsleiter **71, 72** und **73** ab. Der Strahlungsleiter **71** führt über einen Polarisationskontroller **74** (analog dem Polarisationskontroller **PC₂)** und über ein Durchgangsfilter **75** für die Mittenwellenlänge $\lambda_{HC}$ zu einem feststehenden Spiegel **76** (analog Spiegel **25).** Der Strahlungsleiter **72** führt Strahlung mit den Mittenfrequenzen $\lambda_{HC}$ und $\lambda_{LC}$ über ein optisches Abbildungssystem **77,** (analog dem Abbildungssystem **L₂)** wie bereits oben beschrieben, auf eine Weglängenvariationseinheit **79,** welche analog zu den bereits oben beschriebenen ausgebildet sein kann. Der Strahlungsleiter **73** führt Strahlung mit der Mittenwellenlänge $\lambda_{LC}$ durch einen Polarisationskontroller **80** (analog Polarisationskontroller **PC₁**), durch ein für diese Wellenlänge bestimmtes Durchgangsfilter **81** und über ein Abbildungssystem **82** (analog Abbildungssystem **L₂**) als Strahl auf einen auszumessenden Gegenstand **83.**

Mit einer analogen zu der in **Figur 10** gezeigten Anordnung mit einem Dreifachkoppler **59** kann auch analog zu den Anordnungen der **Figuren 7** und **8** mit nur einer Strahlungsquelle **66** (LC) mit kurzer Kohärenzlänge verfahren werden. Anstelle der Strahlungsquelle **65** (HC) wird ein zweiter Strahlungsdetektor analog zum Strahlungsdetektor **67** bzw. **69** gesetzt und der feststehende Reflektor **76** durch einen wellenlängenselektiven Reflektor analog zum Reflektor **115** ersetzt. Die Durchgangsfilter **75** und **81** fallen weg; es werden dafür z.B. am Eingang der Detektoren optische Filter montiert, welche die schmalbandige Strahlung des frequenzselektiven Reflektors unterdrücken (reflektieren, Detektion der breitbandigen Strahlung mit **PA₁**) bzw. transmittieren (Detektion der schmalbandigen Strahlung durch **PA₂**).

Anstelle oder zusätzlich zu den optischen Filtern können auch elektrische Filter in **PA₁** und **PA₂** verwendet werden. Die Filter werden analog zu den in der Anordnung in **Figur 8** verwendeten bestimmt.

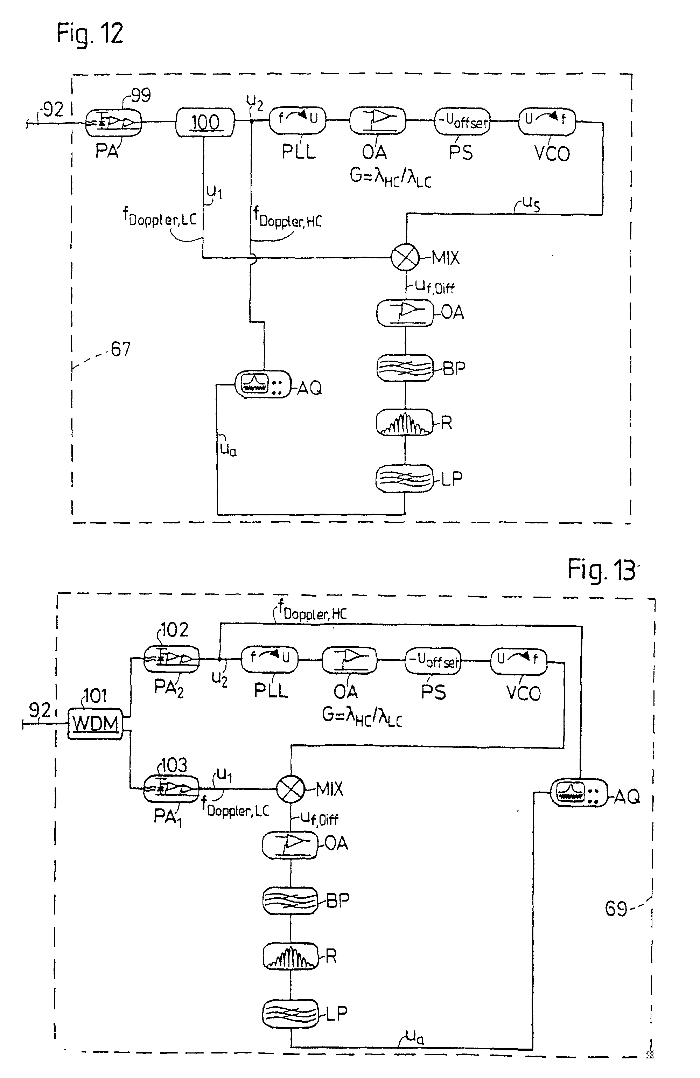

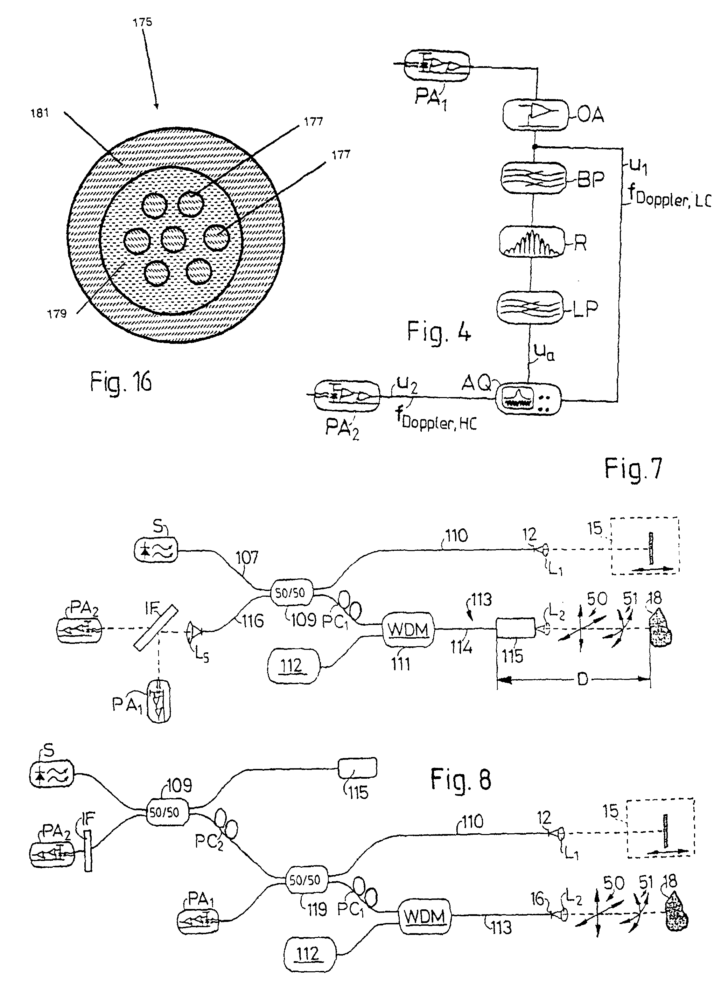

In **Figur 11** ist eine weitere Ausführungsvariante des optischen Aufbaus dargestellt. Die beiden Strahlungsquellen **85** und **86** mit der grossen Kohärenzlänge und der Mittenwellenlänge $\lambda_{HC}$ sowie mit der kleinen Kohärenzlänge und der Mittenwellenlänge $\lambda_{LC}$ sind über je einen Strahlungsleiter **87** bzw. **89** mit einer zur Einheit **WDM** identischen Einheit **90** verbunden. Die durch die Einheit **90** vereinten Strahlungen $\lambda_{HC}$ und $\lambda_{LC}$ werden auf einen Anschluss (links in **Figur 8)** eines Kopplers **91** geführt. Der andere linke Anschluss des Kopplers **91** ist über einen Strahlungsleiter **92** mit einem Detektionssystem analog der Detektionssysteme **67** bzw. **69** verbunden. Ein (rechtsseitiger) Anschluss des Kopplers **91** führt über einen Strahlungsleiter **93** mit Polarisationskontroller **94**, analog zur obigen Beschreibung auf eine Wegvariationseinheit, hier mit **95** gekennzeichnet. Der andere (rechtsseitige) Anschluss des Kopplers **91** führt analog zu den obigen Ausführungen zum auszumessenden Gegenstand **97.**

**Figur 12** zeigt als Blockschaltbild die in den **Figuren 10** und **11** eingesetzte Schaltungsanordnung eines Detektionssystems mit elektrischer Signaltrennung. Die mit dem Strahlungsleiter **92 (Figur 10** und **11)** zugeführten optischen Signale mit den Dopplerfrequenzen **f** $_{Doppler, LC}$ und **f** $_{Doppler, HC}$ werden mit einem einzigen Detektor **99** in entsprechende elektrische Signale umgeformt. Beide Signale unterscheiden sich u.a. durch die unterschiedlichen Dopplerfrequenzen **f**$_{Doppler, LC}$ und **f** $_{Doppler, HC}$, welche mit einer Frequenzweiche **100** aufgetrennt werden. Diese aufgetrennten elektrischen Signale entsprechen den Signalen **u₁** und **u₂** in **Figur 4** und werden, wie zu dieser Figur beschrieben, verarbeitet.

**Figur 13** zeigt als Blockschaltbild die in den **Figuren 10** und **11** eingesetzte Schaltungsanordnung eines Detektionssystems mit optischer Signaltrennung, welche hier über eine Einheit **101** mit analoger Funktion zu dem bereits oben beschriebenen **WDM** optisch getrennt und anschliessend mit je einem Detektor **102** und **103** detektiert werden. Die detektierten Signale werden analog zur Beschreibung der **Figur 4** verarbeitet.

Anstelle des Elements **WDM** können selbstverständlich auch ein dispersives Element (Gitter, Prisma, ...) oder wellenlängenselektive Filter verwendet werden.

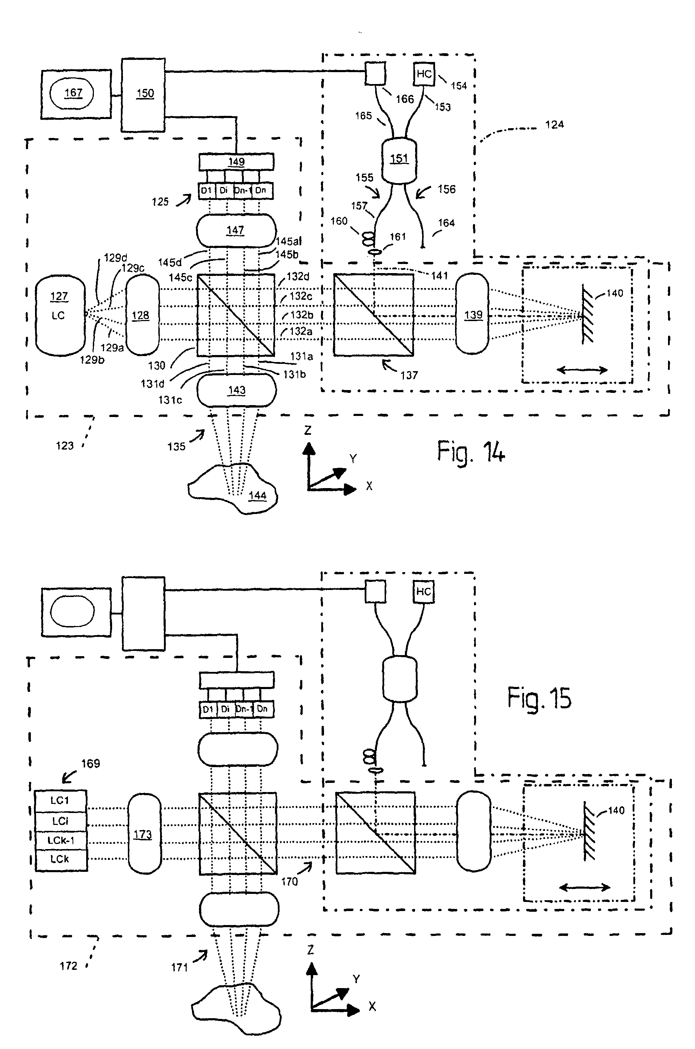

**Figur 14** zeigt ein Blockschaltbild einer Ausführungsvariante der oben beschriebenen Vorrichtung. Auch hier sind zwei miteinander gekoppelte Michelson-Interferometer **123** und **124** vorhanden. Die optischen Komponenten des Michelson-Interferometers **123** sind mit einer gestrichelten Linie umzogen und diejenigen des Michelson-Interferometers **124** mit einer strichpunktierten. Die hier dargestellte Variante gestattet ein gleichzeitiges (paralleles) Ausmessen von verschiedenen im Gegenstand **144** liegenden Punkten ohne den Messstrahl, wie in den **Figuren 1, 7, 8, 9, 10** und **11,** zu bewegen. Das Blockschaltbild dieser Ausführungsvariante unterscheidet sich von den in den **Figur 1, 7, 8, 9, 10** und **11** dargestellten dadurch, dass anstelle des Detektors $PA_1$ nicht mehr nur ein einziger Detektor, sondern eine Detektorenanordnung **125** mit mehreren Detektoren $D_i$ vorhanden ist, wobei i von 1 bis n läuft. Als Detektoranordnung **125** kann beispielsweise ein CMOS-Chip mit integrierten Detektorelementen, Verstärkerelementen, Filterelementen, ... verwendet werden. Durch die Mehrzahl der Detektoren $D_i$ kann die hier gezeigte Vorrichtung mehrere Interferenzsignale gleichzeitig detektieren und unmittelbar anschliessend an die Detektion gleichzeitig elektronisch aufarbeiten. Hierdurch wird die für ein 2- bzw. 3-dimensionales Tomogramm notwendige Zeitdauer erheblich verkürzt, verglichen mit einer Verwendung von Vorrichtungen betreffend der in **Figuren 1, 7, 8, 9, 10** und **11** gezeigten Blockschaltbilder.

Das Michelson-Interferometer **123** weist eine Strahlungsquelle **127** mit kleiner Kohärenzlänge **LC** auf, welche hier beispielsweise vier punktiert dargestellte Strahlen **129a** bis **129d** aussendet. Die vier Strahlen **129a** bis **129d** werden mit einer Kollimationsoptik **128** parallel gerichtet und zu einem physikalischen Strahlteiler **130** geführt. Bei einem physikalischen Strahlteiler bleibt im Gegensatz zum geometrischen Strahlteiler der Bündelquerschnitt in beiden Teilbündeln so gross wie im einfallenden Bündel. Der Strahlteiler **130** teilt die parallelen Strahlen **129a** bis **129d** in zweimal vier Teilstrahlen **131a** bis **131d** und **132a** bis **132d** auf, wobei die Teilstrahlen **131a** bis **131d** im Referenzzweig **133** und die Teilstrahlen **132a** bis **132d** im Objektzweig **135** des Interferometers **123** laufen.

Die Teilstrahlen **132a** bis **132d** durchlaufen einen wellenlängenselektiven, geometrischen Strahlteiler **137** und dann eine Fokussieroptik **139.** Anstelle des wellenlängenselektiven, geometrischen Strahlteilers **137** kann auch ein polaristionsselektiver, geometrischer verwendet werden. Mit der Fokussieroptik **139** werden die Teilstrahlen **132a** bis **132d** auf einen linear bewegten Spiegel **140** als Wegvariationseinheit fokussiert. Die kontinuierliche lineare Bewegung des Spiegels **140** erfolgt parallel zur Richtung der Achsen der parallel gerichteten Teilstrahlen **132a** bis **132d,** also in Richtung der optischen Achse des Referenzzweiges **133.** Anstelle des Spiegels **140** kann selbstverständlich auch die in **Figur 2** dargestellte Wegvariationseinheit verwendet werden. Die Teilstrahlen **132a** bis **132d** passieren den Strahlteiler **137,** während eine Strahlung **141** des Michelson-Interferometers **124,** wie unten beschrieben, von diesem zum Spiegel **140** reflektierend umgelenkt wird, da sie zu den Teilstrahlen **132a** bis **132d** entweder eine andere Wellenlänge oder eine andere Polarisationsrichtung hat.

Die zueinander parallelen Teilstrahlen **131a** bis **131d** werden mit einer Fokussieroptik **143** im Objektzweig **135** des Interferometers **123** auf bzw. in den auszumessenden Gegenstand **144** fokussiert. Die vom Gegenstand **144** und vom Spiegel **140** rückreflektierten Strahlen werden im Strahlteiler **130** überlagert und als vier zueinander parallele Strahlen **145a** bis **145d** zu den Detektoren $D_i$ durch eine fokussierende Detektoroptik **147** in der Detektoranordnung **125** gesandt. Von jedem der Detektoren **Di** wird nur dann ein Interferenzsignal mit der Strahlung der Strahlungsquelle **127** erzeugt, wenn in dem betreffenden Strahl **145a, 145b, 145c** bzw. **145d** die optische Weglänge im Referenzzweig **133** des Interferometers **123** (gemessen vom Strahlteiler **130** bis zum Spiegel **140** und zurück) und die optische Weglänge im Objektzweig **135** des Interferometers **123** (gemessen vom Strahlteiler **130** bis zum Ort der Reflexion im Gegenstand **144** und zurück) sich um höchstens eine Distanz unterscheiden, die kleiner oder gleich der Kohärenzlänge der Strahlung der Strahlungsquelle **127** ist. Ein Polarisationskontroller kann beispielsweise in den Referenzzweig **133** oder in den Objektzweig **135** des Interferometers **123** eingefügt sein, um die Intensität des Interferenzsignales auf den Detektoren $D_i$ zu erhöhen. Die Messsignale der Detektoren $D_i$ werden dann durch parallele Funktionseinheiten aufbereitet.

In **Figur 14** ist beispielsweise eine eindimensionale Detektionsanordnung **125** mit vier Detektoren $D_1$ bis $D_4$ dargestellt. Die zu den Funktionseinheiten gehörenden Baugruppen können ein elektronischer Verstärker, ein elektronisches Bandpassfilter, ein elektronischer Gleichrichter und ein Tiefpassfilter sein. Die an den Ausgängen der Funktionseinheiten in analoger Form vorliegenden aufbereiteten elektrischen Signale werden in einem Analog-zu-digital-Konverter **149** digitalisiert. Die digitalisierten Signale werden dann in einer Datenerfassungseinheit **150** eingelesen. Die Koordinate **x** eines Punktes im Gegenstand **144,** von dem ein Interferenzsignal stammt, wird eindeutig bestimmt durch die Lage der betreffenden Detektionseinheit $D_i$.

Das andere zweite Michelson-Interferometer **124** hat einen Monomode-Faserkoppler **151.** In diesen Koppler **151** wird mit einer Monomodefaser **153** eine Strahlung grosser Kohärenzlänge **HC** von einer Strahlungsquelle **154** eingekoppelt. Der Faserkoppler **151** teilt hier etwa zu gleichen Teilen die Strahlungsintensität in zwei Zweige **155** und **156** auf. Die Strahlung des Zweiges **155** verläuft zunächst in einer Monomodefaser **157** und einem Polarisationskontroller **160.** Nach dem Polarisationskontroller **160** endet die Faser **157; die** am Ende austretende Strahlung wird auf eine Kollimationsoptik **161** geführt. Die kollimierte Strahlung **141** wird dann, wie in **Figur 14** strichpunktiert angedeutet ist, auf den Strahlteiler **137** geführt und wird dann, da sie entweder eine andere Wellenlänge oder eine andere Polarisationsrichtung als die Strahlung der Quelle **127** hat, vom Strahlteiler **137** umgelenkt. Diese umgelenkte Strahlung passiert dann die Fokussieroptik **139,** wird vom bewegten Spiegel **140** rückreflektiert und gelangt dann wieder über den Strahlteiler **137,** die Optik **161** in die Faser **157,** den Polarisationskontroller **160** passierend, in den Koppler **151.** im Koppler **151** wird diese vom kontinuierlich linear bewegten Spiegel **140** rückreflektierte Strahlung einer Strahlung überlagert, welche vom Koppler **151** in den Zweig **156** eingekoppelt wurde und an dessen bevorzugt verspiegeltem Faserende **164** rückreflektiert worden ist. Die überlagerte interferierende Strahlung wird vom Koppler **151** über eine Faser **165** zu einer Detektionseinheit **166** geführt. In der Detektionseinheit **166** wird nur dann ein Interferenzsignal der Strahlung mit einer grossen Kohärenzlänge (HC) von der Strahlungsquelle **154** erzeugt, wenn die optische Weglänge im Zweig **155** (gemessen vom Faserkoppler **151** via Strahlteiler **137** bis zum Spiegel **140** und zurück) und die optische Weglänge im Zweig **156** des Interferometers **124** (gemessen vom Faserkoppler **151** bis zum Faserende **164** und zurück) sich um höchstens eine Distanz unterscheiden, die kleiner oder gleich der Kohärenzlänge der Strahlung (HC) der Strahlungsquelle **154** ist.

Anstelle des Faserkopplers **151** kann auch ein physikalischer Strahlteiler analog zum Strahlteiler **130** verwendet werden, wobei dann jeweils am Koppler die Strahlung aus den Fasern ausgekoppelt werden muss.

Das Interferenzsignal wird in der Detektionseinheit **166** aufbereitet, welche beispielsweise neben einem Photodetektor einen elektronischen Verstärker, ein elektronisches Bandpassfilter, einen elektronischen Komparator und einen elektronischen Zähler hat. Die derart ausgebildete Detektionseinheit **166** ist beispielsweise in der Lage, jedem Wellenberg oder Wellental des Interferenzsignales eine natürliche Zahl zuzuordnen. Die Differenz der zwei natürlichen Zahlen, die zwei Wellenbergen zugeordnet werden, ergibt die Anzahl der Wellenberge N, die zwischen den zwei Wellenbergen vorhanden sind. Die örtliche Distanz zwischen den beiden Wellenbergen ergibt sich aus N multipliziert mit der halben Wellenlänge der Strahlung der Strahlungsquelle **154**. Die erreichbare Genauigkeit einer solchen Distanzmessung beträgt eine halbe Wellenlänge der Strahlung der Strahlungsquelle **154.** Durch eine Interpolation der Schwingungsperioden des Interferenzsignales der Strahlung der Strahlungsquelle **154** kann zudem erreicht werden, dass eine Distanzmessung mit einer Genauigkeit unterhalb der halben Wellenlänge durchführbar ist. Die am Ausgang der Detektionseinheit **166** bevorzugt digital anliegenden Signale werden zur Datenerfassungseinheit **150** geführt. Diese eingelesenen digitalisierten Signale, die natürlichen Zahlen entsprechen, werden den von den Detektoren $D_i$ des Interferometers **123** gelieferten Signalen zugeordnet, wodurch eine Tiefenzuordnung (Koordinate z) im Gegenstand **144** erfolgt.

Mit einer dem Blockschaltbild von **Figur 14** entsprechenden Vorrichtung mit zwei gekoppelten Interferometern **123** und **124** wird durch das oben beschriebene Vorgehen ein Reflektivitätsverlauf der Strahlung kleiner Kohärenzlänge im Gegenstand **144** als Funktion der Koordinaten z und x zu einem bestimmten Zeitpunkt und einem vorgegebenen Koordinatenwert y gemessen. Soll der Reflektivitätsverlauf als Funktion von z, x und y zu einem bestimmten Zeitpunkt gemessen werden, kann anstelle der linearen Detektoranordnung **125** ein zwei-dimensionales Detektorarray verwendet werden. Die Strahlungsanordnung der aus der Strahlungsquelle **127** austretenden Strahlen ist dann derart aufzuweiten, dass sämtliche Detektoren bestrahlt werden.

Soll der Reflektivitätsverlauf als Funktion von z, x, y und der Zeit t gemessen werden, muss das beschriebene Messverfahren zu unterschiedlichen Zeitpunkten wiederholt werden. Auch in diesem Fall wird, wie bereits vorgängig beschrieben, eine analoge Weglängenvariation vorgenommen. Auf einem Monitor **167** kann der Reflektivitätsverlauf als Funktion der Koordinaten z, x oder z, y visualisiert werden. Mit wiederholten Messungen wird auf dem Monitor der Reflektivitätsverlauf als Funktion von z, x, t und/oder z, y, t visualisiert.

Ein Blockschaltbild zu einer Ausführungsvariante der mit dem Blockschaltbild in **Figur 14** dargestellten Vorrichtung zeigt **Figur 15**. Anstelle einer einzigen kurz-kohärenten Strahlungsquelle **127** wird eine Anordnung **169** von mehreren kurz-kohärenten Strahlungsquellen $LC_i$ in einem Michelson- Interferometer **172** verwendet, wobei i von 1 bis n läuft. Es kann hierzu eine Multikern-Faser verwendet werden, die mehrere mit einem aktiven Medium dotierte Kerne (Cores) enthält, oder ein im Lumineszenzbetrieb arbeitendes Diodenarray. Das Michelson-Interferometer **172** ist bis auf die Anordnung **169** und eine unten erwähnte Kollimationsoptikanordnung **173** analog zum Interferometer **123** aufgebaut. In **Figur 15** ist ein Beispiel mit 4 kurz-kohärenten Quellen gezeigt. Punktiert dargestellt sind die vier zueinander parallelen Strahlen der vier Strahlungsquellen $LC_1$ bis $LC_4$. Anstelle der Kollimationsoptik **128** wird hier eine Kollimationsoptikanordnung **173** verwendet. In je einem der Detektionsysteme $D_i$ wird dann nur jeweils ein Interferenzsignal eines Strahls der Strahlungsquelle $LC_i$ erzeugt, wenn für die Strahlung der Strahlungsquelle $LC_i$ die optische Weglänge eines zum Referenzzweig **133** analog ausgebildeten Referenzzweigs **170** und die optische Weglänge eines zum Objektzweig **135** analog ausgebildeten Objektzweigs **171** sich um höchstens eine Distanz unterscheiden, die kleiner oder gleich der Kohärenzlänge der Strahlung der Strahlungsquelle $LC_i$ ist. Ein Michelson-Interferometer mit der hochkohärenten Strahlungsquelle arbeitet analog zu dem in **Figur 14** dargestellten.

Mit einer Vorrichtung gemäss dem Blockschaltbild in **Figur 15** ist ein gleichzeitiges Ausmessen von verschiedenen im Gegenstand liegenden Punkten möglich.

In **Figur 16** wird eine mögliche Ausführung mehrerer kurz-kohärenter Strahlungsquellen gezeigt, die in das Michelson-Interferometer **172** eingekoppelt werden können. Es handelt sich dabei um eine Faser **175**, die hier aus beispielsweise sieben Faserkernen (Cores) **177** besteht, die von einer inneren Umhüllung **179** (Cladding) und einer äusseren Umhüllung **181** umgeben sind. Von den sieben Faserkernen **177** sind sechs in einem Kreis und der siebte in der Mitte angeordnet.

Andere geometrische Anordnungen sind ebenfalls möglich, wie z.B. dreieckig, rechteckig, vieleckig. Die Faserkerne **177** sind mit einer Verbindung dotiert, die beim Bestrahlen mit einer geeigneten Pumplichtstrahlung eine breitbandige Strahlung emittiert. Es können beispielsweise Erbium, Neodymium oder Ytterbium dotierte Faserkerne verwendet werden.

Eine dotierte doppelt ummantelte Multikern-Faser wird in bevorzugter Weise von einem Diodenlaser-Array gepumpt. Die in der Ummantelung geführte optische Anregung (Pumplichtstrahlung) führt zur Erzeugung einer breitbandigen Strahlung in den Faserkernen. Die Faserlänge sowie die Konzentration der Dotierung ist geeignet zu wählen. Es wird hierdurch eine zwei-dimensionale Verteilung von breitbandigen Emittern erzeugt.

Um die Pumpstrahlung und die Strahlung der einzelnen kurz-kohärenten Quellen optimal zu führen, muss der Brechungsindex der Faserkerne grösser sein als derjenige sowohl der äusseren als auch der inneren Ummantelung. Es muss der Brechungsindex der inneren Ummantelung grösser sein als derjenige der äusseren Ummantelung.

Um eine Ortsauflösung im Interferometer **172** nicht zu beeinträchtigen, müssen einerseits die Abstände zwischen benachbarten Faserkernen genügend gross gewählt werden, so dass kein Energieaustausch zwischen ihnen stattfinden kann, und andererseits müssen deren Durchmesser ausreichend klein gewählt werden, damit jeder Emitter im transversalen Grundmode oszilliert. Durch die optionale Behandlung der Faserenden (Abwinkelung und/oder antireflektive Beschichtung) und dem optionalen Einsatz eines in die Faserkerne eingeschriebenen wellenlängenselektiven Gitters werden die Frequenzspektren und die Intensitäten der beitbandigen Strahlungsemitter bestimmt. Allgemein gesprochen kann die beschriebene Pumpkonfiguration dazu verwendet werden, eine transversale Multimodestrahlung, die zum Beispiel ein Diodenlaser-Array abgibt, in mehrere transversale Monomodestrahlungen umzuwandeln.

Es gibt Anwendungen, bei denen es von Vorteil ist, die eine örtliche Intensitätsverteilung über einem Strahlquerschnitt bzw. den Strahldurchmesser $q_x$ auf einen zu bearbeitenden Gegenstand zu ermitteln, bevorzugt während der Bearbeitung zu ermitteln. Derartige Ermittlungen sind beispielsweise beim Erwärmen, Schneiden, Schweißen, Verdampfen, Abtragen von Materialien, insbesondere von Geweben mit Hilfe eines Laserstrahles von Vorteil.

Es lassen sich mit der oben beschriebenen Vorrichtung auch Distanzen $g_x$ und somit auch Materialdicken beliebiger Oberflächenkonturen bestimmen, wobei hier jeweils auf die dabei auftretenden beiden Reflexionen abgestellt wird. Die mögliche Weglängenänderung, hervorgerufen mit der Weglängenvariationseinheit, muß entsprechend groß gewählt sein.

Als Beispiel wird hier aufgezeigt, wie ein Abstand $g_x$ eines Gegenstand von der Auskopplungsoptik, hier das Ende einer Monomodefaser mit einem Kerndurchmesser **B**, sowie der Strahldurchmesser $q_x$ der aus der Faser austretenden Strahlung auf dem Gegenstand bestimmbar ist. Für die Ermittlung des Strahldurchmessers $q_x$ und des Abstands $g_x$ wird eine erste Sammellinse im Abstand ihrer Fokuslänge $h_1$ nach dem Ende der Monomodefaser aufgestellt. Eine zweite Sammellinse mit einer Fokuslänge $h_2$ wird in einem Abstand $g_1$ der ersten Linse nachgeschaltet. Zur Ermittlung des Strahldurchmessers $q_x$ und des Abstands $g_x$ gelten die nachfolgenden Beziehungen:

für den Strahlquerschnitt $q_x = q_0 [1 + ((g_x - h_1 - g_1 - h_2)/z_0)^2]^{1/2}$

wobei $q_0 = B \cdot h_2/h_1$ und $z_0 = \pi q_0^2/\lambda_{LA}$ und $\lambda_{LA}$ die Wellenlänge des "bearbeitenden" Lasers ist

für den Abstand $g_x = h_1 + g_1 + h_2 + z_x$, wobei $z_x$ der Abstand des gewünschten Strahldurchmesser von der Strahltaille $q_0$ ist. Die Einkopplung der Laserstrahlung $\lambda_{LA}$ würde man ausgehend von einer Vorrichtung, deren Blockschaltbild **Figur 1** zeigt, dort mit einem vor dem Strahlungsleiterende **16** eingebrachten Faserkoppler vornehmen. Das dortige Linsensystem ist dann durch die beiden oben genannten Linsen zu ersetzen.

**Patentansprüche**

1. Verfahren zur Messung optischer Eigenschaften transparenter und/oder diffusiver Gegenstände **(18, 83, 97),** insbesondere deren Reflexionsprofile, wobei der Gegenstand **(18, 83, 97)** mit einem Strahl **(7', 55, 73, 96, 113, 114)** bestrahlt wird, dessen Strahlung $(\lambda_{LC})$ eine kleine Kohärenzlänge hat, ein erster Teil dieser ersten Strahlung $(\lambda_{LC})$ in einen Referenzzweig **(5, 72, 93, 110)** in sich selbstreflektierend eingestrahlt und mit optischen Laufzeitänderungen $(v_{scan})$ beaufschlagt, eine vom Gegenstand **(18, 83, 97)** rückreflektierte zweite Teilstrahlung der ersten Strahlung $(\lambda_{LC})$ mit der ersten Teilstrahlung interferierend überlagert, kohärent als ein erster Signalteil $(u_1)$ detektiert und eine zweite Strahlung $(\lambda_{HC})$ mit gegenüber der ersten Strahlung $(\lambda_{LC})$ grossen Kohärenzlänge in einen dritten und vierten Teilstrahl aufgeteilt wird, sowie der dritte Teilstrahl mit einer zur ersten Teilstrahlung $(\lambda_{LC})$ gleichen Laufzeitänderung $(v_{scan})$ beaufschlagt und ein Strahlungsteil der dritten und vierten Strahlung $(\lambda_{HC})$ reflektiert, interferierend überlagert sowie kohärent als ein zweiter Signalteil $(u_2)$ detektiert wird, **dadurch gekennzeichnet, dass** der erste Teil der ersten Strahlung $(\lambda_{LC})$ mit der kleinen Kohärenzlänge und der dritte Teilstrahl $(\lambda_{HC})$ mit einer gegenüber der ersten Strahlung $(\lambda_{LC})$ grossen Kohärenzlänge zu einem einzigen geometrischen Strahl **(5, 5' 11; 72; 93; 110)** zur Erzeugung der Laufzeitänderungen **($v_{scan}$)** vereinigt werden, die Laufzeitänderungen **($v_{scan}$)** periodisch vorgenommen werden und durch die periodischen Laufzeitänderungen **($v_{scan}$)** eine erste Dopplerfrequenz **($f_{Doppler, LC}$)** der ersten Strahlung **($\lambda_{LC}$)** sowie eine zweite Dopplerfrequenz **($f_{Doppler, HC}$)** der zweiten Strahlung **($\lambda_{HC}$)** aufgeprägt werden, und der die jeweilige Dopplerfrequenz **($f_{Doppler, LC}$, $f_{Doppler, HC}$)** aufweisende erste und zweite Signalteil **($u_1$, $u_2$)** zur Ermittlung der optischen Eigenschaften unter Verwendung der erzeugten Dopplerfrequenzen verarbeitet wird.

2. Verfahren nach Anspruch 1, **dadurch gekennzeichnet, dass** die Frequenzwerte der Dopplerfrequenzen **($f_{Doppler, LC}$, $f_{Doppler, HC}$)** des ersten und des zweiten Signalteils **($u_1$, $u_2$)** durch eine geeignete Auswahl der Wellenlängen **($\lambda_{HC}$, $\lambda_{HC}$)** der ersten und zweiten Strahlung und/oder einer geeigneten Ausbildung einer die Weglängenvariation erzeugenden Einheit **(15, 19, 95)** aneinander angeglichen werden.

3. Verfahren nach Anspruch 2, **dadurch gekennzeichnet, dass** die Frequenzwerte der Dopplerfrequenzen **($f_{Doppler, IC}$, $f_{Doppler, HC}$)** elektrisch, insbesondere unter Verwendung eines spannungsgesteuerten Oszillators **(VCO)** oder optisch, insbesondere unter Verwendung von Dispersion oder bevorzugt mittels zusätzlicher dispersiver Elemente im gemeinsamen Referenzzweig **(5, 72, 93, 110)** aneinander angeglichen werden.

4. Verfahren nach einem der Ansprüche 1 bis 3, **dadurch gekennzeichnet, dass** die eine grosse Kohärenzlänge aufweisende zweite Strahlung **($\lambda_{HC}$)** durch Wellenlängenselektion aus der eine kleine Kohärenzlänge aufweisenden ersten Strahlung **($\lambda_{LC}$)** erzeugt wird.

5. Verfahren nach einem der Ansprüche 1 bis 4, **dadurch gekennzeichnet, dass** der den Gegenstand **(18, 83, 97)** bestrahlende Strahl **(7', 55, 73, 96, 113, 114)** diesen abscannend abgelenkt wird.

6. Vorrichtung zur Durchführung des Verfahrens nach einem der Ansprüche 1 bis 5 zur Messung optischer Eigenschaften transparenter und/oder diffusiver Gegenstände **(18, 83, 97),** insbesondere deren Reflexionsprofile, mit zwei gekoppelten Interferometern, wobei das erste Interferometer eine erste Strahlungsquelle **(LC, S)** mit kleiner Kohärenzlänge sowie einen kohärent detektierenden ersten Strahlungsdetektor **($PA_1$)** aufweist und in seinem Messzweig **($PC_1$, $L_2$, 7, 7'; 55,; 73, 80, 81, 82; 113; 114, 115)** der Gegenstand **(18, 83, 97)** anbringbar sowie in seinem Referenzzweig **(9, WDM, 11, $L_1$, 5'; 59, 72; 91, 93, 94; 110)** eine optische Weglängenvariationseinheit **(15, 79, 95)** angeordnet ist und das zweite Interferometer eine zweite Strahlungsquelle **(HC, S)** mit gegenüber der ersten Strahlungsquelle **(LC)** grosser Kohärenzlänge sowie einen kohärent detektierenden zweiten Strahlungsdetektor **($PA_2$)** aufweist und dessen einer Interferometerzweig **($PC_2$, 17, WDM, 11, $L_1$, 5'; 59, 72; 91, 93, 94; 110)** ebenfalls die Weglängenvariationseinheit **(15, 79, 95)** enthält, **dadurch gekennzeichnet, dass** der die Wegvariationseinheit **(15, 79, 95)** enthaltende Interferometerzweig **(5, 11; 72; 93; 110)** des ersten und des zweiten Interferometers ein Element **(WDM; 91; 109; 119)** zum Aufteilen bzw. zum Vereinigen der Strahlungen **(LC, HC)** kleiner und grosser Strahlungskohärenzlänge hat, damit die optische Weglänge der zu einem einzigen geometrischen Strahl vereinigten Strahlungen mit der Weglängenvariationseinheit **(15, 79, 95)** veränderbar ist, und der erste und der zweite Strahlungsdetektor **($PA_1$, $PA_2$)** elektrisch mit einer Auswerteschaltung **(SP, 67, 69)** verbunden sind, mit welcher die elektrischen, jeweils von der Laufzeitänderung herrührende Dopplerfrequenzen **($f_{Doppler, LC}$, $f_{Doppler, HC}$)** enthaltenden Signalteile **($u_1$, $u_2$)** der Detektoren **($PA_1$, $PA_2$)** zur Ermittlung der optischen Eigenschaften unter Verwendung der erzeugten Dopplerfrequenzen verarbeitbar sind.

7. Vorrichtung nach Anspruch 6, **dadurch gekennzeichnet, dass** die Kohärenzlänge der zweiten Strahlungsquelle **(HC, S)** der Differenz der optischen Weglängen zwischen dem anderen, die Weglängenvariationseinheit **(15, 79, 95)** nicht enthaltenden Interferometerzweig **(23)** des zweiten Interferometers und dem Messzweig **($PC_1$, $L_2$, 7, 7'; 55,; 73, 80, 81, 82; 113; 114, 115)** plus optischer Dicke des Gegenstands **(18, 83, 97)** entspricht, damit bei der Messung keine störenden Echos weiterer Grenzflächen entstehen.

8. Vorrichtung nach Anspruch 6 oder 7, **dadurch gekennzeichnet, dass** die Weglängenvariationseinheit **(15, 79, 95)** derart ausgebildet ist, dass sich eine periodische, zeitlich ändernde optische Weglängenänderung zur Erzeugung von Dopplerfrequenzen **($f_{Doppler, LC}$, $f_{Doppler, HC}$)** bei der Strahlung **($\lambda_{HC}$, $\lambda_{LC}$)** der beiden Interferometer ergibt.

9. Vorrichtung nach einem der Ansprüche 6 bis 8, **gekennzeichnet durch** eine Einheit **(PLL, OA, PS, VCO)** zur Angleichung der mit der Weglängenvariationseinheit **(15, 79, 95)** erzeugbaren Frequenzwerte der Dopplerfrequenzen **($f_{Doppler, LC}$, $f_{Doppler, HC}$)** der beiden Interferometerstrahlungen **($\lambda_{HC}$, $\lambda_{LC}$)**.

**10.** Vorrichtung nach einem der Ansprüche 6 bis 9, **dadurch gekennzeichnet, dass** der die Weglängenvariationseinheit **(15)** nicht enthaltende Interferometerzweig ein wellenlängenselektives Filter **(IF)** oder einen wellenlängenselektiven Reflektor **(115)** enthält.

**11.** Vorrichtung nach einem der Ansprüche 6 bis 10, **dadurch gekennzeichnet, dass** die erste und/oder die zweite Strahlungsquelle **(LC, HC; S)** sichtbare Strahlung emittiert, damit deren Strahlung zur Visualisierung des Messorts **(18, 83, 97)** verwendbar ist.

**12.** Vorrichtung nach einem der Ansprüche 6 bis 11, **dadurch gekennzeichnet, dass** der erste Strahlungsdetektor eine Detektoranordnung **(125)** mit mehreren nebeneinander angeordneten kohärent detektierenden Detektorelementen **(Di)** sowie eine Fokussiereinheit **(143)** zur Fokussierung der Strahlung in den Gegenstand **(144)** aufweist, damit mehrere örtlich getrennte optische Signale gleichzeitig detektierbar sind, um ein zwei- bzw. dreidimensionales Tomogramm des Gegenstands **(144)** zu erhalten.

**13.** Vorrichtung nach Anspruch 12, **dadurch gekennzeichnet, dass** die erste Strahlungsquelle mehrere örtlich voneinander getrennte Strahlungsquellen kleiner Kohärenzlänge hat, damit räumliche Reflexionseigenschaften des Gegenstands **(144)** ermittelbar sind.

**14.** Vorrichtung nach Anspruch 13, **dadurch gekennzeichnet, dass** die örtlich voneinander getrennten Strahlungsquellen kleiner Kohärenzlänge eine faseroptischen Strahlungsquelle ist, welche eine äussere Umhüllung **181)**, eine innere Umhüllung **(179)** sowie mehrere mit einem laseraktiven Material dotierte Faserkerne **(177)** hat, wobei eine Pumplichtstrahlung in der inneren Umhüllung **(179)** und die mit der Pumplichtstrahlung erzeugbare kurzkohärente Strahlung in den einzelnen Faserkernen **(177)** führbar ist.

## Claims

**1.** Method for measuring optical properties of transparent and/or diffusive objects (18, 83, 97), more particularly the reflective profiles thereof, wherein the object (18, 83, 97) is irradiated with a beam (7', 55, 73, 96, 113, 114) whose radiation ($\lambda_{LC}$) has a small coherency length, a first component of said first radiation ($\lambda_{LC}$) is directed into a reference branch (5, 72, 93, 110) in a manner that causes it to reflect into itself, and is acted upon by optical transit time variations ($v_{scan}$), a second component radiation of the first radiation ($\lambda_{LC}$), which second component is reflected back by the object (18, 83, 97), is interferentially superimposed on the first component radiation and is detected coherently as a first signal component ($u_1$), and a second radiation ($\lambda_{HC}$) having a large coherency length in relation to the first radiation ($\lambda_{LC}$) is subdivided into a third and fourth component beam, and the third component beam is acted upon by a transit time variation ($v_{scan}$) identical to the first component radiation ($\lambda_{LC}$) and reflects, interferentially superimposes, and coherently detects as a second signal component ($u_2$), a radiation component of the third and fourth radiation ($\lambda_{HC}$), **characterised in that** the first component of the first radiation ($\lambda_{LC}$) having the small coherency length and the third component beam ($\lambda_{HC}$) with a large coherency length in relation to the first radiation ($\lambda_{HC}$) are united to form a single geometric beam (5, 5', 11; 72; 93; 110) for generating the transit time variations ($v_{scan}$), the transit time variations ($v_{scan}$) are actioned periodically and the periodic transit time variations ($v_{scan}$) are used to impress a first Doppler frequency ($f_{Doppler, LC}$) of the first radiation ($\lambda_{LC}$) and a second Doppler frequency ($f_{Doppler, HC}$) of the second radiation ($\lambda_{HC}$), and the first and second signal component ($u_1$, $u_2$) incorporating the respective Doppler frequency ($f_{Doppler, LC}$, $f_{Doppler, HC}$) are processed in order to ascertain the optical properties using the Doppler frequencies that have been generated.

**2.** Method according to claim 1, **characterised in that** the frequency values of the Doppler frequencies ($f_{Doppler, LC}$, $f_{Doppler, HC}$) of the first and the second signal component ($u_1$, $u_2$) are matched to one another by suitable choice of the first and second radiation wavelengths ($\lambda_{LC}$, $\lambda_{HC}$) and/or suitable configuration of a unit (15, 19, 95) generating the path length variation.

**3.** Method according to claim 2, **characterised in that** the frequency values of the Doppler frequencies ($f_{Doppler, LC}$, $f_{Doppler, HC}$) are matched to one another electrically, more particularly using a voltage-controlled oscillator (VCO), or optically, more particularly using dispersion or preferably by means of additional dispersive elements in the common reference branch (5, 72, 93, 110).

**4.** Method according to any of claims 1 to 3, **characterised in that** the second radiation ($\lambda_{HC}$) exhibiting a large coherency length is generated by wavelength selection from the first radiation ($\lambda_{LC}$) exhibiting a small coherency length.

5. Method according to any of claims 1 to 4, **characterised in that** the beam (7', 55, 73, 96, 113, 114) irradiating the object (18, 83, 97) is deflected in a manner that scans the latter.

6. Device for carrying out the method according to any of claims 1 to 5 for measuring optical properties of transparent and/or diffusive objects (18, 83, 97), more particularly the reflective profiles thereof, having two coupled interferometers, the first interferometer incorporating a first radiation source (LC, S) with a small coherency length and a coherently detecting first radiation detector ($PA_1$), and the object (18, 83, 97) being adapted to be mounted in the measuring branch thereof ($PC_1$, $L_2$, 7, 7'; 55; 73, 80, 81, 82; 113; 114, 115) and an optical path length variation unit (15, 79, 95) being disposed in the reference branch thereof (9, WDM, 11, $L_1$, 5'; 59, 72; 91, 93, 94; 110), and the second interferometer incorporating a second radiation source (HC, S) with a large coherency length in relation to the first radiation source (LC) and also a coherently detecting second radiation detector ($PA_2$), and one interferometer branch thereof ($PC_2$, 17, WDM, 11, $L_1$, 5'; 59, 72; 91, 93, 94; 110) likewise containing the path length variation unit (15, 79, 95), **characterised in that** the interferometer branch (5, 11, 72; 93; 110), containing the path length variation unit (15, 79, 95), of the first and the second interferometer has an element (WDM; 91; 109; 119) for respectively dividing and uniting the radiations (LC, HC) with the small and the large coherency length in order that the optical path length of the radiations that have been united to form a single geometric beam can be varied by the path length variation unit (15, 79, 95), and the first and the second radiation detector ($PA_1$, $PA_2$) are electrically wired to an evaluating circuit (SP, 67, 69) by means of which the electrical signal components ($u_1$, $u_2$) of the detectors ($PA_1$, $PA_2$), in each case containing Doppler frequencies ($f_{Doppler, LC}$, $f_{Doppler, HC}$) originating from the transit time variation, can be processed in order to ascertain the optical properties using the Doppler frequencies generated.

7. Device according to claim 6, **characterised in that** the coherency length of the second radiation source (HC, S) corresponds to the difference in optical path lengths between the second interferometer's other interferometer branch (23) that does not contain the path length variation unit (15, 79, 95) and the measurement branch ($PC_1$, $L_2$, 7, 7'; 55; 73, 80, 81, 82; 113; 114, 115) plus the optical thickness of the object (18, 83, 97), in order not to give rise to any disruptive echoes from other boundary surfaces during the measurement process.

8. Device according to claim 6 or 7, **characterised in that** the path length variation unit (5, 79, 95) is configured so as to produce a periodic, temporally varying optical path length variation in order to generate Doppler frequencies ($f_{Doppler, LC}$, $f_{Doppler, HC}$) in the radiation ($\lambda_{HC}$, $\lambda_{LC}$) from the two interferometers.

9. Device according to any of claims 6 to 8, **characterised by** a unit (PLL, OA, PS, VCO) for matching the frequency values of the Doppler frequencies ($f_{Doppler, LC}$, $f_{Doppler, HC}$) of the two interferometer radiations ($\lambda_{HC}$, $\lambda_{LC}$) that can be generated by the path length variation unit (15, 79, 95).

10. Device according to any of claims 6 to 9, **characterised in that** the interferometer branch that does not contain the path length variation unit (15) contains a wavelength-selective filter (IF) or a wavelength-selective reflector (115).

11. Device according to any of claims 6 to 10, **characterised in that** the first and/or the second radiation source (LC, HC; S) emits visible radiation in order that the radiation therefrom can be used to visualise the measurement site (18, 83, 97).

12. Device according to any of claims 6 to 11, **characterised in that** the first radiation detector incorporates a detector assembly (125) having a plurality of coherently detecting detector elements (Di) which are arranged alongside one another, as well as a focusing unit (143) for focusing the radiation into the object (144) in order that a plurality of locally discrete optical signals can be detected simultaneously in order to obtain a two-dimensional or three-dimensional tomogram of the object (144).

13. Device according to claim 12, **characterised in that** the first radiation source has a plurality of radiation sources locally discrete from one another and of a small coherency length in order that spatial reflection properties of the object (144) can be ascertained.

14. Device according to claim 13, **characterised in that** the radiation sources locally discrete from one another and of a small coherency length are a fibre-optic radiation source which has an outer sheath (181), an inner sheath (179) and a plurality of fibre cores (177) doped with a laser-active material, where a pump light radiation in the inner sheath (179) and the short-coherency radiation that can be generated by the pump light radiation are adapted to be guided in the individual fibre cores (177).

## Revendications

1. Procédé pour la mesure de caractéristiques optiques d'objets (18, 83, 97) transparents et/ou diffusants, en particulier de leurs profils de réflexion, l'objet (18, 83, 97) étant exposé aux rayons d'un faisceau (7', 55, 73, 96, 113, 114), dont le rayonnement ($\lambda_{LC}$) a une petite longueur de cohérence, une première partie de ce premier rayonnement ($\lambda_{LC}$) est éclairée sur elle-même de façon autoréfléchissante dans une branche de référence (5, 72, 93, 110) et est sollicitée avec des variations optiques de temps de trajet ($V_{SCAN}$), un deuxième rayonnement partiel, réfléchi par l'objet (18, 83, 97), du premier rayonnement ($\lambda_{LC}$) est superposé avec le premier rayonnement partiel de façon interférente, est détecté de façon cohérente comme une première partie de signal ($u_1$), et un second rayonnement ($\lambda_{HC}$) ayant une longueur de cohérence grande par rapport au premier rayonnement ($\lambda_{LC}$) est subdivisé en un troisième et un quatrième faisceaux partiels, et le troisième faisceau partiel est sollicité avec une variation de temps de trajet ($V_{SCAN}$) identique à celle du premier rayonnement partiel ($\lambda_{LC}$) et une partie de rayonnement des troisièmes et quatrièmes rayonnements ($\lambda_{HC}$) est réfléchie, est superposée de façon interférente et est détectée de façon cohérente comme une seconde partie de signal ($u_2$), **caractérisé en ce que** la première partie du premier rayonnement ($\lambda_{LC}$) avec la petite longueur de cohérence et le troisième faisceau partiel ($\lambda_{HC}$) avec une longueur de cohérence grande par rapport au premier rayonnement ($\lambda_{LC}$) sont réunis pour former un seul faisceau géométrique (5, 5', 11 ; 72 ; 93 ; 110) pour générer les variations du temps de trajet ($V_{SCAN}$), les variations du temps de trajet ($V_{SCAN}$) sont effectuées de façon périodique et une première fréquence Doppler ($f_{Doppler,LC}$) du premier rayonnement ($\lambda_{LC}$) et une seconde fréquence Doppler ($f_{Doppler,HC}$) du second rayonnement ($\lambda_{HC}$) sont marquées par les variations périodiques du temps de trajet ($V_{SCAN}$), et les première et deuxième parties de signal ($u_1$, $u_2$), qui présentent une fréquence Doppler respective ($f_{Doppler,LC}$, $f_{Doppler,HC}$), sont traitées pour déterminer les caractéristiques optiques en utilisant les fréquences Doppler générées.

2. Procédé selon la revendication 1, **caractérisé en ce que** les valeurs de fréquence des fréquences Doppler ($f_{Doppler,LC}$, $f_{Dppler,HC}$) des première et seconde parties de signal ($u_1$, $u_2$) sont ajustées l'une à l'autre par un choix approprié des longueurs d'onde ($\lambda_{HC}$, $\lambda_{HC}$) des premier et second rayonnements et/ou d'une conception appropriée d'une unité (15, 19, 95) générant la variation des longueurs de trajet.

3. Procédé selon la revendication 2, **caractérisé en ce que** les valeurs de fréquence des fréquences Doppler ($f_{Dppler,IC}$, $f_{Doppler,HC}$) sont ajustées l'une à l'autre au plan électrique, en particulier en utilisant un oscillateur commandé en tension (VCO) ou au plan optique, en particulier en utilisant la dispersion ou de préférence au moyen d'éléments diffusants supplémentaires dans la branche de référence commune (5, 72, 93, 110).

4. Procédé selon l'une quelconque des revendications 1 à 3, **caractérisé en ce que** le second rayonnement ($\lambda_{HC}$) présentant une grande longueur de cohérence est généré par sélection de longueurs d'ondes à partir du premier rayonnement ($\lambda_{LC}$) présentant une petite longueur de cohérence.

5. Procédé selon l'une quelconque des revendications 1 à 4, **caractérisé en ce que** le faisceau (7', 55, 73, 96, 113, 114) éclairant l'objet (18, 83, 97) est dévié en scannant celui-ci.

6. Dispositif pour la mise en oeuvre du procédé selon l'une quelconque des revendications 1 à 5, pour mesurer des caractéristiques optiques d'objets (18, 83, 97) transparents et/ou diffusants, en particulier leurs profils de réflexion avec deux interféromètres couplés, dans lequel le premier interféromètre présente une première source de rayonnement (LC, S) avec une faible longueur de cohérence et un premier détecteur de rayonnement ($PA_1$) détectant de façon cohérente, l'objet (18, 83, 97) pouvant être placé dans sa branche de mesure ($PC_1$, $L_2$, 7, 7' ; 55 ; 73 ; 80, 81, 82 ; 113 ; 114 ; 115) et une unité optique de variation de longueur de trajectoire (15, 79, 95) étant disposée dans sa branche de référence (9, WDM, 11, $L_1$, 5' ; 59 ; 72 ; 91, 93, 94 ; 110), et dans lequel le second interféromètre présente une seconde source de rayonnement (HC, S) avec une longueur de cohérence grande par rapport à la première source de rayonnement (LC), un second détecteur de rayonnement ($PA_2$) détectant de façon cohérente, et une branche d'interféromètre ($PC_2$, 17, WDM, 11, $L_1$, 5' ; 59 ; 72 ; 91, 93, 94 ; 110) qui contient également l'unité de variation de longueur de trajet (15, 79, 95), **caractérisé en ce que** la branche d'interféromètre (5, 11 ; 72 ; 93 ; 70), contenant l'unité de variation de trajet (15, 79, 95), du premier et du second interféromètres a un élément (WDM ; 91 ; 109 ; 119) pour la division respectivement pour la réunion des rayonnements (LC, HC) avec une faible et une grande de longueur de cohérence de rayonnement, afin que la longueur de trajet optique des rayonnements réunis en un seul faisceau géométrique puisse être modifiée avec l'unité de variation de longueur de trajet (15, 79, 95), et le premier et le second détecteurs de rayonnement ($PA_1$, $PA_2$) sont reliés électriquement à un circuit d'analyse (SP, 67, 69), avec lequel les parties de signal ($u_1$, $u_2$), électriques et contenant des fréquences Doppler respectives ($f_{Doppler,LC}$, $f_{Doppler,LC}$) provenant de la variation du temps de trajet, des détecteurs ($PA_1$, $PA_2$) peuvent être traitées pour déterminer les caractéristiques optiques en utilisant les fréquences Doppler générées.

**7.** Dispositif selon la revendication 6, **caractérisé en ce que** la longueur de cohérence de la seconde source de rayonnement (HC, S) correspond à la différence des longueurs de trajet optiques entre l'autre branche d'interféromètre (23), qui ne contient pas l'unité de variation de longueur de trajet (15, 79, 95), du second interféromètre et la branche de mesure ($PC_1$, $L_2$, 7, 7' ; 55 ; 73, 80, 81, 82 ; 113, 114, 115) plus l'épaisseur optique de l'objet (18, 83, 97), afin qu'il ne se forme pas des échos perturbateurs provenant d'autres surfaces limites lors de la mesure.

**8.** Dispositif selon la revendication 6 ou 7, **caractérisé en ce que** l'unité de variation de longueur de trajet (15, 79, 95) est conçue de telle façon qu'on obtient une variation optique de longueur de trajet, périodique et variable dans le temps, pour générer les fréquences Doppler ($f_{Doppler,LC}$, $f_{Doppler,HC}$) lors du rayonnement ($\lambda_{HC}$, $\lambda_{LC}$) des deux interféromètres.

**9.** Dispositif selon l'une quelconque des revendications 6 à 8, **caractérisé par** une unité (PLL, OA, PS, VCO) pour l'ajustement des valeurs de fréquence, pouvant être générées avec l'unité de variation de longueur de trajet (15, 79, 95), des fréquences Doppler ($f_{Doppler,LC}$, $f_{Doppler,HC}$) des deux rayonnements d'interféromètre ($\lambda_{HC}$, $\lambda_{LC}$).

**10.** Dispositif selon l'une quelconque des revendications 6 à 9, **caractérisé en ce que** la branche d'interféromètre, qui ne contient pas l'unité de variation de longueur de trajet (15), contient un filtre sélectif en longueur d'onde (IF) ou un réflecteur sélectif en longueur d'onde (115).

**11.** Dispositif selon l'une quelconque des revendications 6 à 10, **caractérisé en ce que** la première et/ou la seconde source de rayonnement (LC, HC ; S) émettent un rayonnement visible, pour que leur rayonnement puisse être utilisé pour la visualisation du lieu de mesure (18, 83, 97).

**12.** Dispositif selon l'une quelconque des revendications 6 à 11, **caractérisé en ce que** le premier détecteur de rayonnement présente un dispositif détecteur (125) avec plusieurs éléments détecteurs (DI) disposés les uns à côté des autres et détectant de façon cohérente, et une unité de focalisation (143) pour la focalisation du rayonnement dans l'objet (144), pour que plusieurs signaux optiques localement séparés puissent être détectés en même temps, afin d'obtenir un tomogramme en deux ou trois dimensions de l'objet (144).

**13.** Dispositif selon la revendication 12, **caractérisé en ce que** la première source de rayonnement a plusieurs sources de rayonnement, séparées localement les unes des autres, avec une faible longueur de cohérence pour qu'on puisse déterminer les caractéristiques de réflexion dans l'espace de l'objet (144).

**14.** Dispositif selon la revendication 13, **caractérisé en ce que** les sources de rayonnement, séparées localement les unes des autres, de faible longueur de cohérence est une source de rayonnement à fibre optique qui a une enveloppe (181) extérieure, une enveloppe (179) intérieure et plusieurs noyaux de fibre (177) dotés avec un matériau actif au laser, de telle sorte qu'un rayonnement de lumière de pompage peut être guidé dans l'enveloppe (179) intérieure, et de telle sorte que le rayonnement de faible longueur de cohérence pouvant être généré avec le rayonnement de lumière de pompage peut être guidé dans les noyaux de fibre (177) individuels.

Fig.1

Fig.2

Fig.5

Fig. 3

Fig. 11

Fig. 9

Fig. 10

Fig. 6

Fig. 12

Fig. 13

EP 1 025 417 B1

Fig. 16

Fig. 4

Fig. 7

Fig. 8

24

Fig. 14

Fig. 15